(19) **Europäisches Patentamt / European Patent Office / Office européen des brevets**

(11) **EP 2 355 212 A1**

(12) **EUROPEAN PATENT APPLICATION**
published in accordance with Art. 153(4) EPC

(43) Date of publication:
**10.08.2011 Bulletin 2011/32**

(21) Application number: **09823460.2**

(22) Date of filing: **07.10.2009**

(51) Int Cl.:
**H01M 4/485** (2010.01)   **H01M 4/131** (2010.01)

(86) International application number:
**PCT/JP2009/067505**

(87) International publication number:
**WO 2010/050347 (06.05.2010 Gazette 2010/18)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.10.2008 JP 2008275931**
**22.06.2009 JP 2009148006**

(71) Applicant: **Kao Corporation**
**Chuo-ku**
**Tokyo 103-8210 (JP)**

(72) Inventors:
- **AKAGI, Ryuichi**
  **Wakayama-shi**
  **Wakayama 640-8580 (JP)**
- **KITAYAMA, Hiroaki**
  **Wakayama-shi**
  **Wakayama 640-8580 (JP)**

- **ISHIKAWA, Yoshinobu**
  **Wakayama-shi**
  **Wakayama 641-0056 (JP)**
- **NISHIMURA, Kenichi**
  **Funabashi-shi**
  **Chiba 274-0826 (JP)**
- **SAITO, Takamitsu**
  **Kanagawa 221-0023 (JP)**
- **MIURA, Tamaki**
  **Kanagawa 221-0023 (JP)**
- **MIYAKUBO, Hiroshi**
  **Kanagawa 221-0023 (JP)**

(74) Representative: **HOFFMANN EITLE**
**Patent- und Rechtsanwälte**
**Arabellastraße 4**
**81925 München (DE)**

(54) **SINTERED LITHIUM COMPLEX OXIDE**

(57)    A sintered lithium complex oxide **characterized in that** the sintered lithium complex oxide is constituted by sintering fine particles of a lithium complex oxide, the peak pore size giving the maximum differential pore volume is 0.80-5.00 $\mu$m, the total pore volume is 0.10-2.00 mL/g, the average particle size is not less than the above-specified peak pore size but not more than 20 $\mu$m, there is a sub-peak giving a differential pore volume not less than 10% of the maximum differential pore volume on the smaller pore size side with respect to the above-specified peak pore size, the pore size corresponding to the sub-peak is more than 0.50 $\mu$m but not more than 2.00 $\mu$m, the BET specific surface area of the sintered lithium complex oxide is 1.0-10.0 m$^2$/g, and the half width of the maximum peak among X-ray diffraction peaks in an X-raydiffraction measurement is 0.12-0.30 deg.

Fig. 1

**Description**

TECHNICAL FIELD

The present invention relates to a sintered lithium complex oxide for obtaining a positive electrode active material having excellent discharge characteristics of a battery, a positive electrode composition for a battery using the sintered lithium complex oxide, a positive electrode for a battery, and a lithium ion battery.

BACKGROUND ART

A non-aqueous electrolyte secondary battery has characteristics of high working voltage and high energy density compared to a conventional nickel-cadmium secondary battery, and the like, and it has been broadly used as a power supply of electronic equipment. A lithium transition metal complex oxide typified by lithium cobaltate), lithium nickelate, lithium manganate or the like has been used as a positive electrode material of the non-aqueous electrolyte secondary battery.

Among these, lithium manganate has advantages such that a raw material is easily obtained with a low cost and that it has lower impact to the environment because a large amount of manganese exists as a resource which is a constituent element of lithium manganate. Because of this, a non-aqueous electrolyte secondary battery using lithium manganate has been conventionally used in mobile electronic equipment typified by mobile phones, laptops, digital cameras or the like.

Because of enhancement of the functions of the mobile electronic equipment such that various functions are added, its use at high temperature or low temperature or the like., the required characteristics of a non-aqueous electrolyte secondary battery used in the mobile electronic equipment has been demanded more and more in recent years. Further, a non-aqueous electrolyte secondary battery is expected to be used as a power supply of a battery for an electric car or the like, and a battery has been demanded which is capable of high-output and high-speed discharge to be able to follow the quick-start and quick-acceleration of a car.

Because of that, attempts have been carried out to improve the smooth insertion and release function of lithium ions by making the average particle size of the positive electrode active material particles such as lithium manganate particles small. For example, there is disclosed in Patent Document 1 described below lithium manganate having an average preliminary particle size of 0.01 to 0.2 $\mu$m and an average secondary particle size of 0.2 to 100 $\mu$m produced by mixing manganese oxide having an average preliminary particle size of 0.01 to 0.2 $\mu$m with a lithium compound and the like to be fired, and then pulverizing the mixture.

However, it is difficult to obtain a diffusion space that is enough for lithium ions to be smoothly inserted and released only by making the average particle size of the positive electrode active material particles small or controlling the average particle size of aggregate particles as described above. Further, when producing a positive electrode using the positive electrode active material particles, there is a problem that it is difficult to secure a diffusion space of lithium ions with stability due to mixing of a binder and the like or due to making the particles into a paste.

Then, there is an attempt for actively forming a space by making the positive electrode active material particles porous besides the space generated in a gap between the positive electrode active material particles for the purpose of expanding the diffusion space of lithium ions.

For example, porous positive electrode active material particles have been proposed in Patent Document 2 described below, which are formed by producing a mixture containing preliminary particles of a lithium-containing complex oxide andpore-forming particles and then by removing a constituent material of the pore-forming particles contained in the mixture. On this occasion, a method is disclosed for removing a part of the constituent material by us ing resin particles such as polystyrene particles as the pore-forming particles, heating the mixture to 300 to 600°C, and thermally decomposing the resin particles.

However, in the production method described in Patent Document 2, it has been found that the charging and discharging characteristics can not be improved sufficiently with the positive electrode active material particles of Patent Document 2 because the structure of the mixture after heating is not stabilized, and the pore-forming property is not sufficient when constituting a positive electrode composition for a battery by further pulverizing the mixture. In the production method described in Patent Document 2, because the positive electrode active material particles are bound to each other by thermally decomposing the resin particles that are the pore-forming particles and then leaving a part of the particles, it has been found that the resin or the like are easily left on the surface of the positive electrode active material particles of Patent Document 2 and that the remained component can easily become a hindrance to insertion and release of lithium ions on the surface of the positive electrode active material particles.

On the other hand, granulated secondary particles of a lithium manganate complex oxide are disclosed in Patent Document 3 described below, which are granulated by a spray drying method using a lithium salt such as lithium carbonate as an open pore-forming agent. However, a specific production method using resin particles is not described.

Further, lithium complex oxide particles for a positive electrode material of a lithium secondary battery are disclosed in Patent Document 4 described below having a main peak in which the peak top exists at a pore size of 0.5 μm or more and 50 μm or less and a sub-peak in which the peak top exists at a pore size of 80 nm or more and 300 nm or less in the pore distribution curve. However, a specific production method using pore-forming particles and an open pore-forming agent is not disclosed.

Furthermore, lithium transition metal compound powders for a positive electrode material of a lithium secondary battery is disclosed in Patent Document 5 described below having at least one main peak in which the peak top exists at a pore size of 300 nm or more and 1500 nm or less and a sub-peak in which the peak top exists at a pore size of 80 nm or more and less than 300 nm in the pore distribution curve. Further, lithium transition metal compound powders for a positive electrode material of a lithium secondary battery is also disclosed in Patent Document 5 having at least one main peak in which the peak top exists at a pore size of 400 nm or more and 1500 nm or less and a sub-peak in which the peak top exists at the pore size of 300 nm or more and less than 400 nm in the pore distribution curve. However, a specific production method using pore-forming particles and an open-pore forming agent is not disclosed.

PRIOR ART DOCUMENTS

PATENT DOCUMENTS

Patent Document 1: Japanese Patent Application Laid-Open No. 2002-104827
Patent Document 2: Japanese Patent Application Laid-Open No. 2005-158401
Patent Document 3: Japanese Patent Application Laid-Open No. 2004-83388
Patent Document 4: Japanese Patent Application Laid-Open No. 2005-123179
Patent Document 3: Japanese Patent Application Laid-Open No. 2008-270161

SUMMARY OF THE INVENTION

PROBLEMS TO BE SOLVED BY THE INVENTION

In the mixing of the active material particles with the pore-forming particles or the open pore-forming agent, mixing at a particle level is preferable. However, it has been found that it is difficult to uniformly disperse both types of particles in the method of Patent Document 2 because the concentration of the solid content of the mixture paste before heating is high. Further, in the method for simply mixing the active material particles with the open pore-forming agent and spray drying the mixture as in Patent Document 3, because aggregation between the active material particles and aggregation between the open pore-forming agents occur by coexistence, it has been found that it is difficult to obtain granules of the mixture in which both the particles and the agents are mixed. When mixing of the active material particles with the pore-forming particles or the open pore-forming agent is non-uniform, it has also been found that a side reaction occurs easily during firing. That is, it has been found that a stable porous structure cannot be obtained by the positive electrode active material particles described in Patent Documents 2 and 3.

Further, it has been found that the high-speed discharge characteristics cannot be improved sufficiently by the lithium complex oxide particles for a positive electrode material of a lithium secondary battery described in Patent Document 4 and the lithium transition metal compound powders for a positive electrode material of a lithium secondary battery described in Patent Document 5.

An object of the present invention is to provide a sintered lithium complex oxide having low internal resistance and excellent high-speed discharge characteristics by forming a stable porous structure, as well as a positive electrode composition for a battery using the sintered lithium complex oxide, a positive electrode for a battery, and a lithium ion battery.

MEANS TO SOLVE THE PROBLEMS

First, the general structure and the action mechanism of a non-aqueous electrolyte secondary battery are described using a lithium ion battery as an example. An electrolyte containing a lithium salt in a non-aqueous solvent is used in the lithium ion battery, and the lithium ion battery has a structure in which a positive electrode having a positive electrode active material and a negative electrode having a negative electrode active material are separated from each other by a separator interposed therebetween. Further, because conductivity of the positive electrode material itself is low in the positive electrode, a conductive material such as carbon black is added to improve the conductivity.

The positive electrode as described above is generally produced by applying a slurry obtained by mixing an active material such as $LiMn_2O_4$, a conductive material such as carbon black, a binder, and a solvent onto a metal foil that becomes a collector, and drying the slurry. As a result, the microstructure of the positive electrode becomes a structure in which the positive electrode active material particles having low conductivity and conductive material particles having a particle size smaller than that of the positive electrode active material particles are dispersed and bonded.

In the positive electrode of a lithium ion battery, lithium ions are absorbed in the positive electrode active material during discharge. At this time, the discharge proceeds by the action between the lithium ions diffusing to the positive electrode side and electrons conducted from a positive electrode collector. Further, the electrons and the lithium ions are released from the positive electrode active material during charging. Because of this, selection of a conductive material having high conductivity and a microstructure of the positive electrode active material become very important as factors that influence characteristics of a battery, especially the high-speed discharge characteristics (higher output).

As described above, the positive electrode active material for a battery of the present invention is a positive electrode constituent material of a non-aqueous electrolyte secondary battery, and refers to a material that performs the action of absorbing and releasing metal ions during charging and discharging.

The present inventors have found that the high-speed discharge characteristics can be improved by controlling the pore distribution of the sintered active material, and thus the present invention has been completed.

That is, the sintered lithium complex oxide of the present invention is a sintered lithium complex oxide, which satisfies the following (I) to (VII):

(I) the sintered lithium complex oxide is constituted by sintering fine particles of a lithium complex oxide;
(II) a peak pore size giving the maximum differential pore volume in a range of a pore size of 0.01 to 10.00 $\mu$m in the pore distribution measured by a mercury porosimeter is 0.80 to 5.00 $\mu$m;
(III) the total pore volume measured by a mercury porosimeter is 0.10 to 2.00 mL/g;
(IV) the average particle size measured by the laser diffraction/scattering type particle size distribution is the peak pore size or more and 20 $\mu$m or less;
(V) a sub-peak giving a differential pore volume that is 10% or more of the maximum differential pore volume exists in the side of the pore size that is smaller than the peak pore size in the pore distribution measured by a mercury porosimeter, and the sub-peak has a pore size of greater than 0.50 $\mu$m and 2.00 $\mu$m or less;
(VI) a BET specific surface area is 1.0 to 10.0 $m^2$/g; and
(VII) the half-value width of the strongest peak among X-ray diffraction peaks in an X-ray diffraction measurement is 0.12 to 0.30 deg.

Further, the present invention relates to a positive electrode composition for a battery using the sintered lithium complex oxide of the present invention, a positive electrode for a battery, and a lithium ion battery.

Furthermore, various physical property values in the present invention are specifically measured by the measurement method described in examples.

EFFECTS OF THE INVENTION

According to the present invention, a sintered lithium complex oxide having excellent high-speed discharge characteristics, as well as a positive electrode composition for a battery using the same, a positive electrode for a battery, a lithium ion battery can be provided because the porous structure is stable and it is less likely to undergo hindrance of ion conduction caused by residues.

BRIEF DESCRIPTION OF THE DRAWINGS

Fig. 1 is a photograph taken by scanning electron microscope (SEM) of sintered lithium complex oxide particles after a firing step is performed in Example 1.
Fig. 2 is a photograph taken by scanning electron microscope (SEM) of sintered lithium complex oxide particles after a firing step is performed in Example 5.
Fig. 3 is a photograph taken by scanning electron microscope (SEM) of sintered lithium complex oxide particles after a firing step is performed in Comparative Example 5.

MODE FOR CARRYING OUT THE INVENTION

The sintered lithium complex oxide of the present invention is constituted by sintering fine particles of a lithium complex oxide. The "fine particles of lithium complex oxide" indicates particles in which a lithium complex oxide is formed into fine particles by pulverization or the like, which constitute the positive electrode active material of the present invention, and whose average particle size is smaller than that of the sintered lithium complex oxide of the present invention. The sintered lithium complex oxide in which fine particles of the lithium complex oxide are sintered can be produced by a method of pulverizing the lithium complex oxide into fine particles and then sintering the fine particles by firing or the like. However, the production method described later becomes effective in order to obtain the sintered lithium complex oxide that satisfies the requirements of (II) to (VII) described above.

Preferred examples of the lithium complex oxide that constitute the sintered lithium complex oxide include a Li-Mn complex oxide such as lithium manganate ($LiMn_2O_4$ and the like), a Li-Co complex oxide such as lithium cobaltate ($LiCoO_2$ and the like), a Li-Ni complex oxide such as lithium nickelate ($LiNiO_2$ and the like), and a Li-Fe complex oxide such as lithium ironate ($LiFeO_2$ and the like), which can discharge lithium ions, from the viewpoints of having a high potential and securing output characteristics. Among these, lithium cobaltate, lithium nickelate, and lithium manganate are preferable from the viewpoints of excellent thermal stability, electric capacity, and output characteristics. Lithium cobaltate is more preferable from the viewpoint of output characteristics. Lithium manganate is more preferable from the viewpoints that the raw material can be easily obtained at a low cost, that it has a lower relative impact to the environment, and that it has excellent thermal stability. Further, lithium nickelate is more preferable from the viewpoint that it has an excellent electric capacity.

The crystal phase of lithium manganate is preferably a spinel type from the viewpoints of having a high potential and securing output characteristics, and specifically it is satisfactory as long as the main peaks obtained by X-ray diffraction analysis are coincident with or have the same level with those of $LiMn_2O_4$ shown in JCPDS (Joint Committee on Powder Diffraction Standards): No. 35-782. For lithium cobaltate, it is satisfactory as long as the main peaks are coincident with or have the same level with those of $LiCoO_2$ shown in JCPDS: No. 50-653. For lithium nickelate, it is satisfactory as long as the main peaks are coincident with or have the same level with those of $LiNiO_2$ shown in JCPDS: No. 9-63.

The pore size of the sintered lithium complex oxide of the present invention, which gives the maximum differential pore volume value (maximum peak pore size) in a range of the pore size of 0.01 to 10.00 $\mu$m in the pore distribution that is measured by a mercury porosimeter, is 0.80 to 5.00 $\mu$m, preferably 1.00 to 3.50 $\mu$m, and more preferably 1.50 to 3.00 $\mu$m. Further, a sub-peak that gives a differential pore volume that is 10% or more of the maximum differential pore volume exists in the side of the pore size that is smaller than the maximum peak pore size, and the pore size of the sub-peak is greater than 0.50 $\mu$m and 2.00 $\mu$m or less, preferably greater than 0.50 $\mu$m and 1.90 $\mu$m or less, and more preferably 0.70 to 1.80 $\mu$m. The "differential pore volume" is obtained by a method using a mercury porosimeter described in page 125 of Experimental Chemistry Lectures Vol. 13, 4th edition (1993), edited by the Chemical Society of Japan and published by Maruzen Co., Ltd., and indicates a value obtained by differentiating a total volume V of particles having the corresponding pore size or more by common logarithms log R of the pore size R (value of d V/d log R).

The pore having a pore size of 0.80 to 5.00 $\mu$m, which is the maximum peak pore size, is considered to be a pore generated by a gap between the sintered lithium complex oxides. Therefore, it is considered that the pore corresponds to a pore that is filled by a conductive material such as carbon black when it is used in the positive electrode for a battery and corresponds to a pore that makes the flow of electrons smooth and plays a role of reducing the resistance of the electrode. From these viewpoints, the maximum peak pore size is 0.80 $\mu$m or more. On the other hand, it is 5.00 $\mu$m or less from the viewpoint of improving the energy density.

The pore of the sub-peak is considered to be a pore inside of the sintered lithium complex oxide. Because the pore size of the sub-peak is greater than 0.50 $\mu$m and 2.00 $\mu$m or less in the present invention, it is considered that the insertion and release of lithium ions are performed smoothly by lithium ions entering in this pore when it is used in the positive electrode for a battery. Accordingly, the sintered lithium complex oxide of the present invention has low internal resistance and excellent high-speed discharge characteristics. Further, favorable battery characteristics can be obtained even when the contents of the conductive material and the binder are decreased at the time of forming the positive electrode for a battery. Further, because the sub-peak is greater than 0.50 $\mu$m, the film forming property of a coating film becomes good. Furthermore, because the sub-peak is 2.00 $\mu$m or less, the sintered lithium complex oxide has excellent strength.

The maximum peak pore size and the pore size of the sub-peak can be controlled within the above-described range by performing removal of the polar solvent by a spray drying method, and adjusting the average particle size of the resin particles mixed into the slurry, the blending ratio of the resin particles mixed into the slurry, the firing temperature, or the firing time or the like in the preferred production method described later. Especially, in order to control the pore size of the sub-peak within the above-described range, the average particle size of the resin particles is preferably 0.1 to 9.0 $\mu$m, more preferably 0.3 to 7.0 $\mu$m, and further preferably 0.5 to 6.0 $\mu$m.

The total pore volume of the sintered lithium complex oxide of the present invention measured by a mercury porosimeter is preferably 0.10 to 2.00 mL/g, more preferably 0.35 to 1. 50 mL/g, and further preferably 0.40 to 1. 50 mL/g from the viewpoint of a balance between the porosity necessary for transfer of lithium ions and the energy density. The total pore volume can be controlled within the above-described range by adjusting the blending ratio of the resin particles mixed into the slurry, the firing temperature, the firing time or the like in the preferred production method described later.

The sintered lithium complex oxide of the present invention has an average particle size (volume median particle size: D50), which is measured by the laser diffraction/scattering type particle size distribution, of the maximum peak pore size or more and 20 $\mu$m or less. However, the average particle size is preferably the maximum peak pore size or more and 15 $\mu$m or less, more preferably the maximum peak pore size or more and 10 $\mu$m or less, further preferably the maximum peak pore size or more and 5 $\mu$m or less, and furthermore preferably the maximum peak pore size or more and 3.5 $\mu$m or less from the viewpoints of, when using the sintered lithium complex oxide in the production of a positive electrode for a battery, improving the insertion and release function of lithium ions and maintaining smoothness of the coating film. The average particle size can be controlled within the above-described range by appropriately setting conditions in the spray drying step described later.

The BET specific surface area of the sintered lithium complex oxide of the present invention is 1.0 to 10.0 m$^2$/g from the viewpoints of promoting transfer of lithium ions and a decrease of a binder content when producing a positive electrode. From the same viewpoints, the BET specific surface area of the sintered lithium complex oxide is preferably 1.0 to 4.0 m$^2$/g, and more preferably 1.2 to 2.5 m$^2$/g. The BET specific surface area can be controlled within the above-described range by selecting the preferred range described later as the firing condition and firing so that the raw material of the sintered lithium complex oxide is sintered.

The half-value width of the strongest peak in the X-ray diffraction peaks in the X-ray diffraction measurement of the sintered lithium complex oxide of the present invention is 0.12 to 0.30 deg, and preferably 0.12 to 0.25 deg from the viewpoint of enhancing the high-speed discharge characteristics by improving the crystallinity. In the case of sintered lithium manganate, it is preferably 0.12 to 0.20 deg; in the case of sintered lithium cobaltate, it is preferably 0.15 to 0.25 deg; and in the case of sintered lithium nickelate, it is preferably 0.15 to 0.25 deg. The half-value width can be controlled within the above-described range by selecting the preferred range described later as the firing condition and firing so that the raw material of the lithium complex oxide is sintered.

The half-value width used herein refers to a half-value width at the strongest diffraction peak in the diffraction data obtained by powder X-ray diffraction analysis, and refers to a value digitized by the method of measurement described later and fitting. For example, it refers to a value digitized by the method described later for a diffraction peak belonging to a (111) face for lithium manganate (LiMn$_2$O$_4$), a (003) face for lithium cobaltate (LiCoO$_2$), and a (003) face for lithium nickelate (LiNiO$_2$).

The sintered lithium complex oxide of the present invention are preferably spherical secondary particles formed by sintering preliminary particles from the viewpoint of securing the diffusion space of lithium ions. "Preliminary particles" indicates the smallest unit of particles that can be confirmed as particles when observing with an electron microscope (5000 X). The "spherical" refers to secondary particles observed by an electron microscope (1000 to 5000 X depending on the particle size) having a ratio of the longest diameter to the shortest diameter (the longest diameter/the shortest diameter) of 1.2 or less. The spherical secondary particles formed by sintering the preliminary particles can be obtained by performing the removal of the polar solvent by a spray drying method and selecting the preferred range described later as the firing condition and firing so that the raw material of the sintered lithium complex oxide is sintered in the preferred production method described later.

Next, a preferred method for producing the sintered lithium complex oxide of the present invention will be described. In the present method, a slurry including resin particles having a specific average particle size, a specific cationic surfactant and/or a specific polyvinyl alcohol derivative, lithium complex oxide particles, and a polar solvent is provided; the polar solvent is removed from the slurry to give a composition; the composition is fired and at the same time, the resin particles are removed from the composition to give a sintered lithium complex oxide.

A quaternary ammonium salt is used as the cationic surfactant. Further, the polyvinyl alcohol derivative is a polyvinyl alcohol into which, as a functional group, a quaternary ammonium salt group has been introduced or which has been substituted by a quaternary ammonium salt group, and is preferably a polyvinyl alcohol into which a quaternary ammonium salt group has been introduced or which has been substituted by a quaternary ammonium salt group in the side chain. Because the cationic surfactant and/or the polyvinyl alcohol derivative exist in the slurry of the present method, it is considered that resin particles (hereinbelow, also referred to as surface-modified resin particles) are obtained whose surface is modified by at least one type of these. Because it is considered that the $\zeta$ potential of these surface-modified resin particles shows a positive value, it can be considered that heterogeneous aggregates canbe formed easily between these resin particles and the lithium complex oxide particles in which the $\zeta$ potential shows a negative value, as describe later.

Examples of the quaternary ammonium salt as the cationic surfactant include alkyltrimethyl ammonium salts such as QUARTAMIN 24P, QUARTAMIN 60W, and QUARTAMIN 86W, each of which is manufactured by Kao Corporation, dialkyldimethyl ammonium salts such as QUARTAMIN D86P and QUARTAMIN D2345P, each of which is manufactured by Kao Corporation, alkoxypropyltrimethyl ammonium salts such as QUARTAMIN E-80K manufactured by Kao Corporation, and alkyldimethylbenzyl ammonium salts such as SANISOL C, SANISOL B-50, and SANISOL P, each of which is manufactured by Kao Corporation. Further, examples of the polyvinyl alcohol derivative include cationized polyvinyl alcohols such as polyvinyl alcohol having a quaternary ammonium salt group in the side chain (GOHSEFIMER K-210) manufactured by Nippon Synthetic Chemical Industry Co. , Ltd.). Among these, alkyltrimethyl ammonium salts and cationized polyvinyl alcohols are preferable from the viewpoint of affinity with the polar solvent.

The amount of the quaternary ammonium salt and/or the polyvinyl alcohol derivative added to the slurry is preferably in a range of 0.05 to 20 parts by weight relative to 100 parts by weight of the resin particles for charge adjustment. When it is in this range, the charge can be adjusted sufficiently and a side reaction becomes difficult to occur in the firing step described later. From the same viewpoint, the added amount is more preferably in a range of 0.1 to 15 parts by weight, and further preferably 0.5 to 15 parts by weight.

The type of the polar solvent is not especially limited. However, a polar solvent is preferable having a relative dielectric constant of 10 to 100, which is measured under the condition of a temperature of 20°C with a frequency range, in order to easily obtain the surface-modified resin particles in which the $\zeta$ potential shows a positive value. From the same viewpoint, the relative dielectric constant is more preferably 15 or more, and further preferably 20 or more. Examples of the polar solvent having a relative dielectric constant in the above-described range include water, ethyl alcohol, methyl ethyl ketone or the like and a water solvent is preferable in order to easily control the polymerization reaction described later and in order to easily obtain the surface-modified resin particles in which the $\zeta$ potential shows a positive value, and ion exchanged water and distilled water are more preferable for reasons such that no impurities are mixed therein and that there is no side reaction, and ion exchanged water is furthermore preferable.

The average particle size of the resin particles is 0.1 to 20 $\mu$m from the viewpoints that transfer of lithium ions is made easy, that the energy density is increased when being made into an electrode by increasing the bulk density of the obtained sintered lithium complex oxide, that uniform heterogeneous aggregates can be easily obtained, and that the porous structure of the positive electrode active material can be easily obtained. From the same viewpoints, it is preferably 0.1 to 10 $\mu$m, more preferably 0.1 to 7 $\mu$m, and further preferably 0.2 to 6 $\mu$m.

The resin particles are preferably used which is solid at room temperature, and is oxidatively decomposed at a temperature where the lithium complex oxide is sintered. Examples thereof include polystyrenes, polyolefins, fluorine resins, poly(meth)acrylates, poly(meth)acrylonitriles, poly(meth) acrylamides, copolymers thereof or the like, they may be the products from the market, or particles may be used which are obtained separately by polymerization. Among these, resin particles are preferable which is obtained by the emulsion polymerization or the suspension polymerization of an ethylenically unsaturatedmonomer in the presence of the cationic surfactant and/or the polyvinyl alcohol derivative in the polar solvent from the viewpoint of easily obtaining the surface-modified resin particles in which the $\zeta$ potential shows a positive value. An example of a method for producing the preferred resin particles is described later.

The lithium complex oxide that constitutes the lithium complex oxide particles is the same as in the case of the sintered lithium complex oxide of the present invention as described above.

The average particle size of the lithium complex oxide particles is preferably 0.1 to 5 $\mu$m, more preferably 0.3 to 4$\mu$ m, and further preferably 0.5 to 2 $\mu$m from the viewpoints of securing high output characteristics, improving the film forming property of a coating film, and improving the electric capacity by increasing crystallinity.

An adjustment of the average particle size of the lithium complex oxide particles can also be performed by dry pulverizing. However, it is preferably performed by wet pulverization in the presence of a solvent. In the wet pulverization, a ball medium type mill is preferably used such as a wet bead mill, a ball mill, an attritor, a vibration mill and the like.

In the present method, the polar solvent is removed from the slurry to give a composition containing the resin particles, the cationic surfactant and/or the polyvinyl alcohol derivative, and the lithium complex oxide particles, and then this composition is fired and at the same time, the resin particles are removed from the composition. The polar solvent is preferably removed while stirring or shaking.

Further, in the present method, the slurry practically includes the resin particles, the cationic surfactant and/or the polyvinyl alcohol derivative, the lithium complex oxide particles, and the polar solvent. Accordingly, it is considered that by using the lithium complex oxide particles in which the $\zeta$ potential shows a negative value and the surface-modified resin particles in which the $\zeta$ potential shows a positive value and utilizing an attractive force due to an electric charge between these particles when removing the polar solvent, the lithium complex oxide particles and the surface-modified resin particles, can be mixed at a particle level and at the same time, a side reaction becomes difficult to occur in the firing step described later. That is, it is considered in the present method that aggregation only between the lithium complex oxide particles and aggregation only between the resin particles are prevented and that the lithium complex oxide particles and the resin particles can be uniformly mixed at a particle level. Accordingly, it is considered that the sintered lithium complex oxide having a stable porous structure can be provided.

Further, it is considered that aggregates in which the lithium complex oxide particles and the surface-modified resin particles are mixed at a particle level (hereinbelow, also referred to as heterogeneous aggregates) can be obtained when removing the polar solvent. That is, the heterogeneous aggregates can be obtained as a composition containing the resin particles, the cationic surfactant and/or the polyvinyl alcohol derivative, and the lithium complex oxide particles.

The content of the resin particles in the aggregates is preferably 0.1 to 40% by weight, more preferably 1 to 30% by weight, and further preferably 2 to 16% by weight in the aggregates from the viewpoints of preferably securing a pore size and preferably performing sintering of the lithium complex oxide, etc.

When using a Li-Mn complex oxide as the lithium complex oxide, the content of the resin particles in the aggregates is preferably 1 to 30 parts by weight, and more preferably 5 to 10 parts by weight relative to 100 parts by weight of the complex oxide from the viewpoint of battery characteristics. When using a Li-Co complex oxide as the lithium complex oxide, the content of the resin particles in the aggregates is preferably 1 to 40 parts by weight, and more preferably 5 to 25 parts by weight relative to 100 parts by weight of the complex oxide from the viewpoint of battery characteristics. When using a Li-Ni complex oxide as the lithium complex oxide, the content of the resin particles in the aggregates is preferably 1 to 30 parts by weight, and more preferably 8 to 16 parts by weight relative to 100 parts by weight of the complex oxide from the viewpoint of battery characteristics.

It is important to adjust the average particle size of the resin particles and to adjust the surface electric charges of the resin particles dispersed into the polar solvent in order to preferably constitute the heterogeneous aggregates.

The average particle size of the resin particles is adjusted in a range of 0.1 to 20 μm from the viewpoints that transfer of lithium ions is made easy, that the energy density is increased when being made into an electrode by increasing the bulk density of the obtained sintered lithium complex oxide, that uniform heterogeneous aggregates can be easily obtained, and that the porous structure of the sintered lithium complex oxide can be easily obtained. The average particle size in the prescribed range can be adjusted by controlling the concentration of an initiator when polymerizing the particles from the ethylenically unsaturated monomer described later, the polymerization reaction temperature, the aging temperature or the like. For example, the average particle size of the resin particles can be easily adjusted in the above-described prescribed range by making the concentration of the initiator 0.1 to 5% by weight, the polymerization reaction temperature 40 to 80°C, and the aging temperature 60 to 80°C. Further, the average particle size of the resin particles can be also easily adjusted in the above-described prescribed range by controlling the amount of the added quaternary ammonium salt and/or the polyvinyl alcohol derivative in the preferable range described above.

The adjustment of the surface charges of the resin particles can be easily performed by controlling the amount of the added quaternary ammonium salt and/or the polyvinyl alcohol derivative in the preferable range described above.

In order to more easily mix the lithium complex oxide particles with the surface-modified resin particles at a particle level, the ζ potential of the lithium complex oxide particles is preferably -1 to -100 mV, and the ζ potential of the surface-modified resin particles is preferably +1 to +100 mV, the ζ potential of the lithium complex oxide particles is more preferably -20 to -100 mV, and the ζ potential of the surface-modified resin particles is more preferably +10 to +100 mV, and the ζ potential of the lithium complex oxide particles is further preferably -30 to -100 mV, and the ζ potential of the surface-modified resin particles is further preferably +20 to +100 mV.

Moreover, in the present method, other components may be added to the slurry in a range where the heterogeneous aggregation is not hindered and where the effects of the present invention are not hindered. Specific examples of the other components are described later.

A preferred embodiment of the present method will be described below. First, a slurry A is prepared which contains the resin particles having an average particle size in the above-described specific range, which are obtained by performing the emulsion polymerization or the suspension polymerization of an ethylenically unsaturated monomer in the presence of the cationic surfactant and/or the polyvinyl alcohol derivative in a polar solvent 1, and also contains the cationic surfactant and/or the polyvinyl alcohol derivative, and the polar solvent 1 (Step 1). Next, a slurry C is obtained by mixing the lithium complex oxide particles with the slurry A or by mixing a slurry B containing the lithium complex oxide particles and a polar solvent 2 with the slurry A (Step 2). Next, a composition containing the resin particles, the cationic surfactant and/or the polyvinyl alcohol derivative, and the lithium complex oxide particles is obtained by removing the polar solvent 1 or the polar solvents 1 and 2 from the slurry C (Step 3). Then a sintered lithium complex oxide is obtained by firing the composition and at the same time, removing the resin particles from the composition (Step 4). Moreover, examples of the polar solvents 1 and 2 include water, ethyl alcohol, methyl ethyl ketone or the like, and a water solvent is preferable in order to easily control the polymerization reaction described later and to easily obtain the surface-modified resin particles in which the ζ potential shows a positive value, more preferably ion exchanged water and distilled water for reasons such that impurities are not mixed therein and that there is no side reaction, and further preferably ion exchanged water.

In Step 1 of the present embodiment, the slurry A is prepared which practically includes the resin particles, the cationic surfactant and/or the polyvinyl alcohol derivative, and the polar solvent 1 by performing the emulsion polymerization or the suspension polymerization of an ethylenically unsaturated monomer in the presence of the cationic surfactant and/or polyvinyl alcohol derivative.

The resin particles obtained by polymerizing the ethylenically unsaturated monomer are solid at room temperature, and are preferably oxidatively decomposed at a temperature where the lithium complex oxide is sintered (600°C or more). Therefore, vinylidene fluoride, ethylene fluoride, acrylonitrile, or acrylic acid, methacrylic acid, and esters thereof such as methylmethacrylate, butylmethacrylate and the like are preferable as the ethylenically unsaturated monomer. Among these, acrylic acid, methacrylic acid, and esters thereof are more preferable, and methylmethacrylate and butylmethacrylate such as t-butylmethacrylate are further preferable from the points that it has excellent affinity with the polar solvent and that the adjustment of the particle size is relatively easily performed in a range of 0.1 to 20 μm. The obtained resin particles may be a homopolymer or a copolymer.

The concentration of the obtained resin particles is preferably in a range of 1 to 60% by weight, more preferably in a range of 2 to 40% by weight, and further preferably in a range of 3 to 25% by weight relative to the entire slurry A from the viewpoints of dispersion stability of the resin particles and adjustment of the concentration of a solid content of the slurry C in a preferred range.

The slurry A practically includes the resin particles, the cationic surfactant and/or the polyvinyl alcohol derivative, and the polar solvent 1. However, in the present embodiment, other components may be added to the slurry A in a range where the heterogeneous aggregation described later is not hindered and where the effects of the present invention are not hindered.

Examples of the other components include a nonionic surfactant used as an emulsifier or a suspending agent when emulsifying or suspending the ethylenically unsaturated monomer, an amphoteric surfactant, and a cationic surfactant other than the quaternary ammonium salt. Among these, a nonionic surfactant is preferable because the ethylenically unsaturated monomer before the reaction can be uniformly dispersed into the polar solvent 1 when the nonionic surfactant is used. The amount of the added nonionic surfactant is preferably 0.01 to 10 parts by weight, more preferably 0.1 to 10 parts by weight, and further preferably 0.5 to 10 parts by weight relative to 100 parts by weight of the ethylenically unsaturated monomer from the viewpoint of the dispersion property of the ethylenically unsaturated monomer in the polar solvent 1.

In Step 2 of the present embodiment, the slurry C is obtained by mixing the lithium complex oxide particles with the slurry A or by mixing a slurry B practically including the lithium complex oxide particles and a polar solvent 2 with the slurry A. The slurry C is preferably obtained by mixing the slurry B with the slurry A in Step 2 from the viewpoints that uniform heterogeneous aggregates can be easily obtained and that the porous structure of the positive electrode active material can be easily obtained.

In the slurry B, the concentration of the lithium complex oxide particles is preferably 1 to 40% by weight, more preferably 5 to 30% by weight, and further preferably 10 to 20% by weight. When it is in this range, it is considered that the lithium complex oxide particles can be uniformly dispersed, that the heterogeneous aggregates can be easily obtained, and that the concentration of the solid content of the slurry C can be adjusted in a preferred range. Moreover, a pulverization step such as wet pulverization may be carried out separately or when dispersing into the polar solvent 2 in order to obtain the slurry B in which the lithium complex oxide particles are uniformly dispersed.

The slurry B practically includes the lithium complex oxide particles and the polar solvent 2. However, in the present embodiment, other components may be added to the slurry B in a range where the heterogeneous aggregation is not hindered and where the effects of the present invention are not hindered.

Examples of the other components include an anionic surfactant such as POIZ 532A, manufactured by Kao Corporation and a nonionic surfactant such as EMULGEN 108 and RHEODOL 440V, manufactured by Kao Corporation from the viewpoint of uniformly dispersing the lithium complex oxide particles into the polar solvent 2. Among these, when an anionic surfactant is used, it is considered that the lithium complex oxide particles can be uniformly dispersed into the polar solvent 2 and that the surface charges of the lithium complex oxide particles can be made to be a state suitable for heterogeneous aggregation. The amount of the added anionic surfactant is preferably 0.05 to 10 parts by weight, and more preferably 0.1 to 5 parts by weight relative to 100 parts by weight of the lithium complex oxide particles from the viewpoint of the dispersion property of the lithium complex oxide particles.

Further, the slurry C practically includes the slurry A and the lithium complex oxide particles or the slurry B. However, in the present embodiment, other components may be added to the slurry C in a range where the heterogeneous aggregation is not hindered and where the effects of the present invention are not hindered.

Examples of the other components that can be added to the slurry C include a cationic surfactant and a nonionic surfactant. When an anionic surfactant is added to the slurry B, a cationic surfactant is preferably added to the slurry C. This is because it is considered that re-separation of the formed heterogeneous aggregates can be prevented by counterbalancing charges between the cationic surfactant and the anionic surfactant. The quaternary ammonium salt and the polyvinyl alcohol derivative for modifying the surface of the resin particles can be used as the cationic surfactant. Among these, polyvinyl alcohol such as GOHSEFIMER, K-210 having a quaternary ammonium salt group in the side chain can be preferably used as the cationic surfactant because it is considered that the formed heterogeneous aggregates can be stabilized. The amount of the added cationic surfactant is preferably 0.01 to 10 parts by weight, more preferably 0.04 to 5 parts by weight, and further preferably 0.1 to 2 parts by weight relative to 100 parts by weight of the lithium complex oxide particles added to the slurry C in order to certainly prevent re-separation of the heterogeneous aggregates. When adding the cationic surfactant, the cationic surfactant may be added to the slurry A in advance before preparing the slurry C, and then the lithium complex oxide particles or the slurry B may be blended with the mixture of the cationic surfactant and the slurry A or the slurry C may be prepared and then the cationic surfactant may be added to the slurry C. The amount of the cationic surfactant finally contained in the slurry C is preferably 0.01 to 10 parts by weight, and more preferably 0.04 to 5 parts by weight relative to 100 parts by weight of the lithium complex oxide particles.

The concentration of the lithium complex oxide particles in the slurry C is preferably 5 to 30% by weight, and more preferably 8 to 25% by weight in order to easily control the average particle size of the obtained sintered lithium complex oxide particles within the above-described range.

Further, the slurry C is preferably aged before performing Step 3 by heating at a temperature from 30°C or more to a temperature that does not exceed the glass transition temperature of the surface-modified resin particles for 10 to 300 minutes from the viewpoint of obtaining heterogeneous aggregates having a large particle size. It is not clear why the heterogeneous aggregates having a large particle size are obtained by aging. However, it is considered that heterogeneous aggregates that incorporate the lithium complex oxide particles grow when the partial polymerization reaction of the surface-modified resin particles occurs by aging and the heterogeneous aggregates having a large particle size is obtained. When the glass transition temperature of the surface-modified resin particles is 140°C or less, the aging temperature is more preferably 40 to 120°C, and further preferably 50 to 100°C from the viewpoints of obtaining heterogeneous aggregates having a larger particle size and the shape stability of the surface-modified resin particles. From the same viewpoints, the aging time is more preferably 30 to 240 minutes, and further preferably 60 to 180 minutes.

In Step 3 of the present embodiment, a method of removing the polar solvent may be any method of removing the polar solvent by reduced pressure drying, heat drying, vacuum drying, static drying, fluidized drying or the like, a method of spray drying the slurry C, or a combination thereof. However, a spray drying method is preferably adopted from the viewpoints that the average particle size after firing can be adjusted without disintegrating or lightly pulverizing the aggregates in advance and the porous structure can be stably maintained in Step 4 described later. The drying temperature when removing the polar solvent is not especially limited. However, when using water as the polar solvent, it is preferably 50 to 150°C, and more preferably 80 to 120°C from the viewpoint of completely removing water from the slurry C.

The spray drying method is a preferable method in that the particle size can be adjusted arbitrarily during drying and that porous particles can be designed. In the adjustment of the particle size and the designing of the porous particles, the objective particle size and porous particles can be obtained by adjusting the concentration of the solid content of the spray liquid, the temperature of the spray liquid introducing part, the spraying pressure, the flow rate of the spray liquid, and the nozzle diameter of the spray drying apparatus. Especially, the concentration of the solid content of the spray liquid (slurry C) is important in the relationship of the designing of the porous particles and the adjustment of their particle size. The concentration thereof is preferably in a range of 1 to 50% by weight, more preferably in a range of 5 to 30% by weight, further preferably in a range of 5 to 20% by weight.

In Step 4 of the present embodiment, the sintered lithium complex oxide is obtained by firing the composition (heterogeneous aggregates) and at the same time, removing the resin particles from the composition.

In Step 4, the resin particles are thermally decomposed and removed by firing the obtained composition. The firing of the composition is preferably performed in the preferred firing condition described later. This is because the sintering of the lithium complex oxide particles, etc. and the production of porous active material particles by thermally decomposing and removing the resin particles can be performed in parallel.

In Step 4, the composition is preferably fired and at the same time, the resin particles and the cationic surfactant and/or the polyvinyl alcohol derivative are preferably thermally decomposed and removed from the composition from the viewpoint of preventing a side reaction when sintering the lithium complex oxide particles. The thermal decomposition and removal of the resin particles and the cationic surfactant and/or polyvinyl alcohol derivative becomes possible by, for example, firing the composition in the preferred firing condition described later.

It is considered that the firing treatment of the composition can provide the obtained porous structure with stable strength, improve the crystallinity of the sintered lithium complex oxide, and improve high-speed discharge characteristics because the insertion and release function of lithium ions of lithium manganate for example is easily exhibited. Moreover, in the present method, the remaining lithium complex oxide particles and the like may be sintered after the resin particles are removed by thermal decomposition.

Sintering refers to a bonding reaction when powder particles bond to each other by the bonding reaction in which a pure solid phase between solids is mixed or a liquid phase is partially mixed due to heating of an assembly of mixed mineral powder (From "Encyclopedia of Chemistry (Kagaku Daijiten) 4" published in October 15, 1981). Any one of the following states is preferably achieved in the present invention by firing the composition (aggregates) to a point where the lithium complex oxide particles are sintered.

(1) A porous sintered lithium complex oxide or its pulverized material includes constituent elements of a raw material for a sintered lithium complex oxide.

(2) A porous sintered lithium complex oxide or its pulverized material has a half-value width of 0.3 deg or less.

(3) A porous sintered lithium complex oxide or its pulverized material has a weight reduction (change) of less than 1% when fired (in air) at 600°C for 1 hour.

When the resin particles are removed by firing, the firing is preferably performed while supplying a gas that vaporizes the product by reacting with the resin particles at a high temperature such as air and oxygen to the firing atmosphere.

The removal of the resin particles by firing is a method of vaporizing the reaction product by performing a chemical reaction with a gas, and it is preferably a method of oxidizing and vaporizing by heating in the presence of oxygen. The firing can be performed in the air atmosphere. However, it is preferably performed while flowing air or oxygen gas or a mixed gas of nitrogen and oxygen. Accordingly, the resin particles are removed completely, and a side reaction can be prevented when the lithium complex oxide particles are sintered.

The firing of the composition can be performed with various electric furnaces such as a box-shaped furnace, a crucible furnace, a tubular furnace, an electric furnace with bottom elevating system, a rotary kiln furnace and various furnaces. Among these, a box-shaped furnace is preferable from the viewpoint of atmosphere control. The highest temperature of firing is preferably 600°C or more from the viewpoints that the thermal decomposition reaction of the resin particles can be performed completely and the removal of the resin particles can be performed completely, and that sintering of the lithium complex oxide particles can be performed sufficiently. On the other hand, it is preferably 1000°C or less from the viewpoint of preventing a side reaction and the composition change of the lithium complex oxide particles.

When using a Li-Mn complex oxide as the lithium complex oxide, the highest temperature of firing is preferably 600 to 900°C, and more preferably 700 to 850°C from the viewpoint of the battery characteristics. When using a Li-Co complex oxide as the lithium complex oxide, the highest temperature of firing is preferably 600 to 1000°C, and more preferably 700 to 950°C from the viewpoint of the battery characteristics. When using a Li-Ni complex oxide as the lithium complex oxide, the highest temperature of firing is preferably 600 to 750°C, and more preferably 600 to 700°C from the viewpoint of the battery characteristics.

The temperaturemaybe increased to the highest temperature of firing at a constant speed or may be increased at a stepwise speed. When the temperature is increased at a constant speed, the temperature is increased at a slower speed than 500°C/hour, more preferably at a slower speed than 400°C/hour, further preferably at a slower speed than 300°C/hour from the viewpoint of maintaining a uniform temperature. The firing time is 1 hour or more from the viewpoints that the thermal decomposition reaction of the resin particles can be performed completely and the removal of the resin particles can be performed completely, and that the firing of the lithium complex oxide particles can be performed sufficiently. On the other hand, it is preferably 100 hours or less from the viewpoint of preventing a side reaction and the composition change of the lithium complex oxide particles.

The sintered lithium complex oxide obtained by firing can be used as the positive electrode active material particles for a battery as it is. However, when the removal of the polar solvent is performed by reduced pressure drying, vacuum drying, or a combination thereof, the sintered lithium complex oxide is preferably used as the positive electrode active material particles for a battery through a pulverization step so that a prescribed particle size can be achieved. When the removal of the polar solvent is performed by spray drying, such a step is not especially necessary.

The preferred production method in order to obtain the sintered lithium complex oxide of the present invention is described above. However, a method for obtaining the sintered lithium complex oxide of the present invention is not limited to the above-described production method. For example, an anionic surfactant may be used instead of the quaternary ammonium salt and/or the polyvinyl alcohol derivative used as a compound that modifies the surface of the resin particles in the production method. In this case, it is preferable to use the anionic surfactant in a form where it is not incorporated into a polymer chain of a polymer that constitutes the resin particles. That is, the anionic surfactant is preferably the one that does not have a radical polymerization group. With an anionic surfactant that is not incorporated into a polymer chain, the surface of the resin particles is modified by the anionic surfactant, and therefore the dispersion property of the resin particles (surface-modified resin particles) becomes good. Accordingly, it is considered that the heterogeneous aggregates can be formed easily with the lithium complex oxide particles. Examples of the anionic surfactant that is not incorporated into a polymer chain (does not have a radical polymerization group) include alkylbenzene sulfonate, alkylsulfate, polyoxyethylene alkyl ether sulfate, alkylphosphate, polyoxyethylene alkyl ether phosphate or the like. The resin particles whose surface is modified by the anionic surfactant may be products from the market, or the particles may be obtained separately by polymerization. Further, resin particles whose surface is modif ied by the anionic surfactant may be subjected to surface treatment with a quaternary ammonium salt and/or a polyvinyl alcohol derivative and used in the formation of the heterogeneous aggregates with the lithium complex oxide particles.

When using the anionic surfactant as a compound that modifies the surface of the resin particles and using a Li-Mn complex oxide as the lithium complex oxide, the content of the resin particles in the aggregates is preferably 1 to 30 parts by weight, and more preferably 5 to 10 parts by weight relative to 100 parts by weight of the complex oxide from the viewpoint of battery characteristics. When using the anionic surfactant as a compound that modifies the surface of the resin particles and using a Li-Co complex oxide as the lithium complex oxide, the content of the resin particles in the aggregates is preferably 1 to 40 parts by weight, and more preferably 5 to 25 parts by weight relative to 100 parts by weight of the complex oxide from the viewpoint of battery characteristics. When using the anionic surfactant as a compound that modifies the surface of the resin particles and using a Li-Ni complex oxide as the lithium complex oxide, the content of the resin particles in the aggregates is preferably 1 to 30 parts by weight, and more preferably 5 to 10 parts by weight relative to 100 parts by weight of the complex oxide from the viewpoint of battery characteristics.

However, the compound that modifies the surface of the resin particles is preferably the quaternary ammonium salt and/or the polyvinyl alcohol derivative from the viewpoint that uniform aggregates can be easily obtained.

In any of the cases, the average particle size of the lithium complex oxide particles, the average particle size of the resin particles or the like is desirably adjusted so that the sintered body has a maximum peak pore size of 0.80 to 5.00 $\mu$m, preferably 1.00 to 3.50 $\mu$m, more preferably 1.50 to 3.00 $\mu$m, the sintered body has a sub-peak pore size of greater than 0.50 $\mu$m and 2.00 $\mu$m or less, preferably greater than 0.50 $\mu$m and 1.90 $\mu$m or less, and more preferably 0.70 to 1.80 $\mu$m, and the sintered body has a total pore volume of 0.10 to 2.00 mL/g, preferably 0.35 to 1.50mL/g, and more preferably 0.40 to 1.50mL/g. For example, in order to increase the maximum peak pore size of the sintered body, the concentration of the solid content of the slurry C may be increased, and in order to increase the pore size of the sub-peak of the sintered body, the average particle size of the resin particles or the average particle size of the lithium complex oxide particles may be increased. In order to increase the total pore volume, the content of the resin particles may be increased or the firing may be performed in the above-described preferred firing condition.

The sintered lithium complex oxide (positive electrode active material particles) of the present invention can be preferably used as the positive electrode active material particles of a lithium ion battery. Therefore, the positive electrode composition for a battery of the present invention is a positive electrode composition for a battery containing positive electrode active material particles for a battery including the sintered lithium complex oxide of the present invention and a conductive material. The positive electrode composition for a battery of the present invention is preferably a positive electrode composition for a battery containing positive electrode active material particles for a battery including the sintered lithium complex oxide of the present invention and a conductive material, and a binder.

In the positive electrode composition for a battery of the present invention, the average particle size of the positive electrode active material particles for a battery is preferably 0.8 to 15 times, more preferably 1.0 to 8 times, and further preferably 1.2 to 5 times that of the average particle size of the resin particles in the above-described slurry. When the average particle size of the positive electrode active material particles for a battery is in the above-described range, the average particle size of the positive electrode active material particles for a battery can be preferably made to be 1 to 10 times, more preferably 1.5 to 8 times, and further preferably 1.8 to 5 times of its maximum pore size, even when the particle distribution of the resin particles is considered, or the case where the heterogeneous aggregates shrink when it is fired in Step 4 and the like are considered. Accordingly, when the particles are used in the production of a positive electrode for a battery, smoothness of the coating film can be easily maintained, and at the same time, the insertion and release of lithium ions at the obtained positive electrode for a battery can be furthermore improved. The average particle size of the positive electrode active material particles for a battery is desired to be adjusted by pulverization and classification. The "pulverization" is a concept including ion and light pulverization. As a method of adjusting the average particle size of the positive electrode active material particles for a battery within the range, disintegration or pulverization is preferably performed on the positive electrode active material particles after firing with a wet or dry treatment. Further, the classification of the obtained particles may be performed.

When performing the wet treatment, the positive electrode active material particles are added at a concentration of 5 to 30% by weight to a polar solvent that is the same as above. When an ultrasonic homogenizer such as homogenizer US series manufactured by NIHONSEIKI KAISHA LTD. is used, ultrasonic waves are irradiated preferably at a condition of a rated power of 50 to 3000 W and an oscillatory frequency of 10 to 30 kHz, preferably for 30 seconds to 10 minutes and more preferably for 30 seconds to 3 minutes. And then the polar solvent may be removed by evaporation.

Further, when performing the dry treatment, the positive electrode active material particles may be pulverized using a rotor speed mill (P-14, manufactured by Fritsch GmbH) for example with a rotation number preferably in a range of 6000 to 20000 rpm and more preferably in a range of 6000 to 15000 rpm and a sieving ring mesh condition of 0.08 to 6.0 mm.

Any of the conventional conductive materials used to form a positive electrode can be used as the conductive material, and the conductive material including carbon such as carbon black, carbon fiber, carbon nano-tube and the like can be preferably used.

The content of the conductive material in the positive electrode composition for a battery is preferably 3 to 20 parts by weight, and more preferably 5 to 15 parts by weight relative to 100 parts by weight of the positive electrode active material particles from the viewpoints of improving the conductivity as a positive electrode and improving the energy density.

The positive electrode composition for a battery of the present invention can be preferably used as the positive electrode of a lithium ion battery. Therefore, the positive electrode for a battery of the present invention is a positive electrode for a battery containing the positive electrode active material particles for a battery including the sintered lithium complex oxide of the present invention, a conductive material, and a binder.

The positive electrode for a battery can be produced by, for example, preparing a slurry for forming a positive electrode in which the positive electrode active material particles for a battery, the conductive material, the binder, and a solvent are mixed, and applying this slurry for forming a positive electrode onto a metal foil that becomes a collector and drying the slurry. Further, a lithium ion battery is produced by laminating the positive electrode together with a negative electrode and a separator, and injecting an electrolyte. Therefore, the lithium ion battery of the present invention is a lithium ion battery equipped with a positive electrode for a battery containing positive electrode active material particles for a battery including the sintered lithium complex oxide of the present invention, a conductive material, and a binder.

Any of the conventional binders used to form a positive electrode can be used as the binder, and polyvinylidene fluoride (PVDF), polyamideimide, polytetrafluoroethylene, polyethylene, polypropylene, polymethylmethacrylate, etc. can be preferably used.

The content of the binder is preferably 5 to 20 parts by weight, and more preferably 10 to 15 parts by weight relative to 100 parts by weight of the positive electrode active material particles from the viewpoint of a better balance between the binding performance of the positive electrode active material particles and the conductive material and the conductivity as a positive electrode.

Any of the conventional solvents used to form a positive electrode can be used as the solvent. For example, N-methyl-2-pyrrolidone (NMP), dimethylformamide (DMF), dimethylacetamide, methyl ethyl ketone, tetrahydrofuran, acetone, ethanol, and ethyl acetate, etc. can be preferably used. Further, any of the conventionally known additives used to form a positive electrode can be added to the slurry for forming a positive electrode.

The viscosity of the slurry for forming a positive electrode is preferably 1000 mPa·s or more, and more preferably 2000 mPa·s or more from the viewpoint of the thickness of the electrode to be obtained. Further, it is preferably 15000 mPa·s or less, and more preferably 10000 mPa·s or less from the viewpoint of the coating property onto the collector.

The concentration of the solid content of the slurry for forming a positive electrode is preferably 20% by weight or more, and more preferably 35% by weight or more from the viewpoint of the preferred slurry viscosity. Further, it is preferably 60% by weight or less, and more preferably 45% by weight or less from the viewpoint of the preferred slurry viscosity.

According to the present invention, a lithium ion battery having excellent high-speed discharge characteristics can be provided. For the high-speed discharge characteristics, the ratio of the discharge amount of 60 C relative to that of 1 C is preferably 50 ormore, more preferably 65% ormore, and further preferably 75% or more in the evaluation of the battery characteristics described later.

Use of the lithium ion battery of the present invention is not especially limited, and it can be used in consumer equipments such as batteries for a cordless vacuum cleaner, a cordless power tool, an electric car, a hybrid car, etc., and an auxiliary power supply for a fuel cell car, as well as it can be used in electronic devices such as a laptop, an electronic book player, a DVD player, a mobile audio player, a video movie, a mobile TV, and a mobile phone. Among these, it is preferably used as a battery for a car which especially requires a high output.

EXAMPLES

Hereinbelow, examples and the like that specifically show the present invention will be described. Moreover, for evaluation items in the examples and the like, measurements were performed as follows.

<Measurement of ζ (zeta) potential>

An ion exchanged water slurry containing 0.1% by weight of lithium complex oxide particles or surface-modified resin particles was irradiated with ultrasonic waves at a frequency of 19 kHz at an output of 300 W using an ultrasonic homogenizer for one minute. The irradiation with ultrasonic waves was stopped, and after 5 minutes, the measurement of the ζ potential was performed on particles in the ion exchanged water slurry at 25°C. The measurement was performed using a zeta potential measurement apparatus (Nano-ZS, manufactured by Malvern Instruments, Ltd.) for a measurement apparatus, using a Disposable Zeta Cell that is an exclusive cell (made of polystyrene, 10 mm cell) setting the measurement appliedvoltage to be 150 V, and setting the measurement mode to be Auto for the entire process.

<Average particle size>

A value of a volume median particle size (D50) when the particle size distribution after irradiation with ultrasonic waves at an ultrasonic irradiation intensity level 4 for one minute was measured at a relative refractive index of 1.7 with water as a dispersion medium using a laser diffraction scattering type particle size distribution measurement apparatus (LA920, manufactured by Horiba, Ltd.), and was made to be the average particle size of the lithium complex oxide particles in the slurry B, the average particle size of the lithium complex oxide particles after pulverization of the bulk raw material and the average particle size of the positive electrode active material particles after firing.

A value of a volume median particle size (D50) when the particle size distribution after treatment with ultrasonic waves at an ultrasonic irradiation intensity level 4 for one minute was measured at a relative refractive index of 1.5 with water as a dispersion medium using a laser diffraction scattering type particle size distribution measurement apparatus (LA920, manufactured by Horiba, Ltd.) without delay by sampling about 1 mL of a polymer emulsion (slurry A), and was made to be the average particle size of the resin particles. According to the above-described measurement method, the average particle size of the resin particles or the average particle size of the surface-modified resin particles are obtained. However, in the present invention, the average particle size obtained by the above-described measurement method was made to be "the average particle size of the resin particles". Therefore, even when the average particle size of the surface-modified resin particles was obtained by the above-desoribed method, its measurement value was made to be "the average particle size of the resin particles".

<measurement of pore size and pore volume>

A pore volume in a range of 0.008 to 200 $\mu$m of the sintered lithium complex oxide was measured using a mercury porosimeter (mercury intrusion type pore distribution measurement apparatus, PoreSizer 9320, manufactured by Shimadzu Corporation), and the obtained value was made to be the total pore volume of the sintered lithium complex oxide particles. Further, the pore size of the peak top of the maximum peak among peaks in the pore distribution obtained by the measurement was made to be the maximum peak pore size of the sintered lithium complex oxide particles.

<BET specific surface area>

The BET specific surface area of the sintered lithium complex oxide was measured by a nitrogen gas adsorption method using a specific surface area measurement apparatus (FlowSorb III 2305, manufactured by Shimadzu Corporation).

<Measurement of half-value width of X-ray diffraction peak>

The measurement was performed on the sintered lithium complex oxide using an X-ray diffractometer (RINT 2500, manufactured by Rigaku Corporation) at the conditions of an X-ray output of 40 kV and 120 mA; irradiation slits being made to be a radiating slit 1 deg, a deceiving slit 0.3 mm, and a scattering slit 1 deg; and a scanning speed of 2 deg ($2\theta$) per minute. Then, the half-value width was digitized by fitting the diffraction peak belonging to a (111) face for lithium manganate ($LiMn_2O_4$), a (003) face for lithium cobaltate ($LiCoO_2$), and a (003) face for lithium nickelate ($LiNiO_2$) with a false void function (Lawrence component ratio 0.5) The fitting was performed using a software, JADE (version 5.0) manufactured by Materials Data Incorporated.

<High-speed discharge characteristics>

A slurry for forming a positive electrode was prepared by adding 83.3 parts by weight of polyvinylidene fluoride in a 12% by weight N-methyl-2-pyrrolidone solution (#1320, manufactured by Kureha Corporation) , 10 parts by weight of carbon black (HS-100, manufactured by Denki Kagaku Kogyo Kabushiki Kaisha) as a conductive material, and 93.3 parts by weight of N-methyl-2-pyrrolidone as a solvent to 80 parts by weight of the positive electrode active material particles including the sintered lithium complex oxide obtained in examples and comparative examples and uniformly mixing the mixture. The slurry for forming a positive electrode was uniformly applied onto an aluminum foil (thickness 20 $\mu$m) used as a collector with a coater, and it was dried at 140°C over 10 minutes or more. After drying, it was molded to have a uniform film thickness with a press machine, cut into a piece having a prescribed size (20 mm $\times$ 15 mm), and made into a positive electrode for testing. At this time, the thickness of the electrode active material layer was 25 $\mu$m, the weight thereof was 19.5 mg, and the density thereof was 2.6 g/cm$^3$. For the condition of the press machine, it was adjusted appropriately in a range of 3 to 10 ton/cm$^2$ so that the density became 2.6 g/cm$^3$. A test cell was produced using the above-described positive electrode for testing. In a method for producing a negative electrode used in the test cell, a slurry first prepared by adding 99.8 parts by weight of polyvinylidene fluoride in a 10% by weight N-methyl-2-pyrrolidone solution (#9210, manufactured by Kureha Corporation) as a binder to 90 parts by weight of hard carbon (Carbotron P powder, manufactured by Kureha Corporation) , adding 32.3 parts by weight of N-methyl-2-pyrrolidone to this mixture, and kneading the mixture, was applied onto a copper foil (thickness 15 $\mu$m), and dried at 140°C over 10 minutes or more. After drying, it was molded to have a uniform film thickness with a press machine, cut into a piece having a prescribed size (20 nm $\times$ 15 mm), and made into a negative electrode for testing. At this time, the thickness of the electrode active material layer was 20 $\mu$m, the weight thereof was 5.8 mg, and the density thereof was 1.0 g/cm$^3$. For the condition of the press machine, it was adjusted appropriately in a range of 3 to 10 ton/cm$^2$ so that the density became 1.0 g/cm$^3$. However, a metal lithium foil cut into a piece having a prescribed size (20 mm $\times$ 15 mm) was used as the negative electrode used in Examples 13 and 14 and Comparative Example 7. For a separator that separates the positive electrode and the negative electrode, #2400 manufactured by Celgard, LLC was used. For an electrolyte, a solution was used in which $LiPF_6$ was dissolved in an ethylene carbonate / diethyl carbonate (1 : 1 vol%) solvent at a concentration of 1 mol/L. The assembly of the test cell was performed in a glove box under an argon atmosphere. After the assembly of the test cell, it was left at 25°C for 24 hours, and then the evaluation of the following high-speed discharge characteristics was performed.

Constant-current charge and discharge was performed on the test cell at 0.2 C. Then, a capacity (A) of the test cell was obtained by (1) constant-current charging at 0.5 C and then constant-current discharging at 1 C, and a capacity (B) of the test cell was obtained by performing (1), and (2) constant-current charging at 0.5 C and then constant-current discharging at 60 C. The ratio of (B) to (A) was made to be the high-speed discharge characteristics.

$$\texttt{High-speed discharge characteristics (\%) = B/A × 100}$$

<Evaluation of internal resistance>

As a condition "a", the internal resistance of the test cell obtained in the manner as described above was evaluated by the following method. First, each battery was adjusted to about 60% of a fully charged state by charging to 4.0V at a constant current of 0.2 C and then performing a constant-voltage charge at 4.0 V for one hour. After that, the current was stopped for 60 seconds, and then the potential was measured. Next, discharge was performed at a constant current of 0.2 C for 10 seconds, and then the potential was measured (1st cycle). The difference of the potentials before and after discharge at this time was made to be a potential drop value. Next, after the current was stopped for 60 seconds, each battery was adjusted to about 60% of a fully charged state by charging to 4. 0V at a constant current of 0.2 C and then performing a constant-voltage charge at 4.0 V for one hour in the same manner as described above. After that, the current was stopped for 60 seconds, and then the potential was measured. Next, discharge was performed at a constant current of 0.5 C for 10 seconds, and then the potential was measured (2nd cycle). This cycle was repeated until the 7th cycle by changing the current value as shown in Table 1. A value of the internal resistance ($\Omega$) of each battery was obtained from the slope of a primary approximate straight line of the values of the current- drop voltage plot in which the potential drop value obtained in each cycle was plotted in the y-axis, and the discharge current value was plotted in the x-axis.

[Table 1]

|  | CHARGE CURRENT | DISCHARGE CURRENT |
|---|---|---|
| 1ST CYCLE | 0.2C | 0.2C |
| 2ND CYCLE | 0.2C | 0.5C |
| 3RD CYCLE | 0.2C | 1C |
| 4TH CYCLE | 0.2C | 5C |
| 5TH CYCLE | 0.2C | 15C |
| 6TH CYCLE | 0.2C | 30C |
| 7TH CYCLE | 0.2C | 60C |

As a condition "b", the internal resistance was evaluated in the same method as described above on a test cell produced in the same method as in the condition "a" except that a slurry for forming a positive electrode was prepared by adding 62.5 parts by weight of polyvinylidene fluoride in a 12% by weight N-methyl-2-pyrrolidone solution (#1320, manufactured by Kureha Corporation), 7.5 parts by weight of carbon black (HS-100, manufactured by Denki Kagaku Kogyo Kabushiki Kaisha) as the conductive material, and 111.7 parts by weight of N-methyl-2-pyrrolidone as the solvent to 85 parts by weight of positive electrode active material particles including the sintered lithium complex oxide obtained in Examples 1, 7, 13, and 15 and Comparative Examples 5 and 7 and uniformly mixing the mixture.

Further, as a condition "c", the internal resistance was evaluated in the same method as described above on a test cell produced in the same method as in the condition "a" except that a slurry for forming a positive electrode was prepared by adding 41. 7 parts by weight of polyvinylidene fluoride, in a 12% by weight N-methyl-2-pyrrolidone solution (#1320, manufactured by Kureha Corporation), 5 parts by weight of carbon black (HS-100, manufactured by Denki Kagaku Kogyo Kabushiki Kaisha) as the conductive material, and 130 parts by weight of N-methyl-2-pyrrolidone as the solvent to 90 parts by weight of positive electrode active material particles including the sintered lithium complex oxide obtained in Examples 1, 7, 13, and 15 and Comparative Examples 5 and 7 and uniformly mixing the mixture.

<Observation by Scanning Electron Microscope (SEM)>

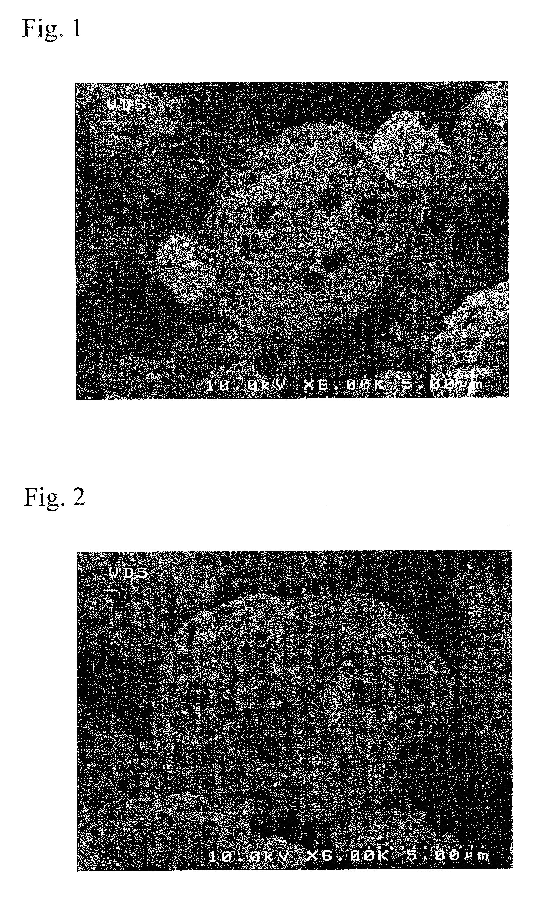

The observation of the sintered lithium complex particles after the firing step was performed by an SEM (S-4000, manufactured by Hitachi, Ltd., at a magnification of 5000 X), and the forms of the particles were confirmed. Any of the sintered lithium complex oxide particles of the examples and the comparative examples shown below are spherical secondary particles in which preliminary particles were sintered. As one example, photos taken by SEM of the sintered lithium complex oxide particles obtained in Examples 1 and 5 and Comparative Example 5 are shown in Figs. 1 to 3, respectively.

(Example 1)

<Production of slurry A>

First, 9. 6 g of polymethylmethacrylate particles from the market (MX-150, manufactured by Soken Chemical & Engineering Co., Ltd.: average particle size 1.5 $\mu$m) was added to 32 g of a 4% by weight aqueous solution of GOHSEFIMER K-210 manufactured by Nippon Synthetic Chemical Industry Co., Ltd., which is polyvinyl alcohol having a quaternary ammonium salt group in the side chain, an ultrasonic dispersion treatment was performed for 1 minute, then 168 g of ion exchanged water was added thereto, and the ultrasonic dispersion treatment was performed again for 1 minute. The $\zeta$ potential was measured after diluting the obtained polymer emulsion (slurry A) containing surface-modified resin particles (particles A) with ion exchanged water based on the sample condition described above, and it was confirmed that the $\zeta$ potential of the particles A was positive (+25 mV).

<Production of slurry B>

A slurry was prepared by adding 225 g of lithium cobaltate particles (HLC-17, manufactured by Honjo Chemical Corporation) and 22.4 g of a dispersant (POIZ 532A, manufactured by Kao Corporation: 40% by weight aqueous solution of a polycarboxylic acid polymer surfactant) to 1270 g of ion exchanged water, and then a pulverization treatment was performed by Ultra Apex Mill UAM-05 manufactured by Kotobuki Industries Co. , Ltd. At this time, the media (zirconia) size was made to be 0.1 mm, the media filling rate was made to be 70%, and the circumferential speed was made to be 1 2 m/s . This pulverization treatment was completed after 90 minutes from the start when it was confirmed that the average particle size reached to 1.5 $\mu$m. The $\zeta$ potential was measured after diluting the obtained slurry (slurry B) containing lithium complex oxide particles (particles B) with ion exchanged water based on the sample condition described above, and it was confirmed that the $\zeta$ potential of the particles B was negative (-67 mV).

<Production of slurry C>

First, 400 g of the slurry B (corresponds to 59.3 g of lithium cobaltate, 100 parts by weight of lithium cobaltate) was placed in a 1 L flask, a dispersion treatment was performed using an ultrasonic homogenizer while stirring, and at the same time, 209.6 g of the slurry A (resin particles : 16 parts by weight, GOHSEFIMER K-210: 2.2 parts by weight) was gradually added to this slurry B. After that, a dispersion treatment was performed for 10 minutes, and a slurry C was obtained.

<Aggregation step>

Aggregates containing lithium cobaltate particles and resin particles were obtained by performing spray drying (temperature at the introducing part 125°C, temperature at the discharging part 70°C, air flow rate 0.6m$^3$/minute, spray pressure 110 kPa, spray liquid flow rate 200 mL/hour) using this slurry C with a spray drying apparatus (SD-1000, manufactured by Tokyo Rikakikai Co., Ltd.).

<Firing step>

Sintered lithium cobaltate particles (see Fig. 1) were obtained by placing the above-described aggregates in an alumina crucible and firing in an electric furnace (MS electric furnace SLA-2025D, manufactured by Motoyama Co., Ltd., production number MS-0435). After the temperature of the furnace reached the maximum firing temperature (800°C) at an average temperature rising speed of 400°C/hour, the firing was performed at 800°C for 30 hours while constantly flowing air into the furnace at a flow rate of 5 L/minute.

(Example 2)

<Production of slurry A>

First, 50 g of t-butylmethacrylate, 250 g of ion exchanged water, 25 g of a 4% by weight aqueous solution of GOHSEFIMER K-210 manufactured by Nippon Synthetic Chemical Industry Co., Ltd. , 0.36 g of EMULGEN 1135S-70 manufactured by Kao Corporation as a nonionic surfactant, and 0.15 g of V-65 manufactured by Wako Pure Chemical Industries, Ltd. as an initiator were mixed. The mixture was emulsified by performing a dispersion treatment on the mixture for 5 minutes using an ultrasonic homogenizer (Ultrasonic Generator; MODEL US-300T, manufactured by NIHONSEIKI KAISHA LTD., probe diameter: 20 mm, V-LEVEL: 400 μA) . After that, the total amount of the mixture was placed in a 1L separable flask, the temperature was increased to 55°C while stirring under a nitrogen atmosphere, and it was stirred for 3 hours. After that, the temperature was further increased to 65°C, and it was aged for 1.25 hours. After aging, it was cooled to room temperature, and a slurry A was obtained. The average particle size of the resin particles contained in this polymer emulsion was 5.0 μm. The ζ potential of the particles A was positive (+41 mV).

<Production of slurry B>

A slurry B was obtained in the same method as in Example 1.

<Production of slurry C>

First, 400 g of the slurry B (corresponds to 59.3 g of lithium cobaltate, 100 parts by weight of lithium cobaltate) was placed in a 1 L flask, a dispersion treatment was performed using an ultrasonic homogenizer while stirring, and at the same time, 60 g of the slurry A (resin particles: 16 parts by weight, GOHSEFIMER K-210: 0.3 part by weight) was gradually added to this slurry B. After that, a slurry C was obtained by further adding ion exchanged water to adjust the ion exchanged water to 900 parts by weight relative to 100 parts by weight of lithium cobaltate and then performing a dispersion treatment for 10 minutes.

<Aggregation step and firing step>

Sintered lithium cobaltate particles were obtained by performing the aggregation step and the firing step in the same method as in Example 1.

(Example 3)

Sintered lithium cobaltate particles were obtained by performing from the production of the slurry to the firing step in the same method as in Example 1 except that the maximum firing temperature in the firing step was made to be 650°C.

(Example 4)

<Production of slurry A>

A slurry A was obtained in the same method as in Example 1.

<Production of slurry B>

A slurry B was obtained in the same method as in Example 1.

<Production of slurry C>

First, 400 g of the slurry B (corresponds to 59.3 g of lithium cobaltate, 100 parts by weight of lithium cobaltate) was placed in a 1 L flask, a dispersion treatment was performed using an ultrasonic homogenizer while stirring, and at the same time, 104.8 g of the slurry A (resin particles: 8.1 parts by weight, GOHSEFIMER K-210: 1.1 parts by weight) was gradually added to this slurry B. After that, a slurry C was obtained by further adding ion exchanged water to adjust the ion exchanged water to 900 parts by weight relative to 100 parts by weight of lithium cobaltate and then performing a dispersion treatment for 10 minutes.

<Aggregation step and firing step>

Sintered lithium cobaltate particles were obtained by performing the aggregation step and the firing step in the same method as in Example 1.

(Example 5)

<Production of slurry A>

First, 19.2 g of polymethylmethacrylate particles from the market (mix-150, manufactured by Soken Chemical & Engineering Co., Ltd.: average particle size 1.5 $\mu$m) was added to 64 g of a 4% by weight aqueous solution of GOHSEFIMER K-210, and an ultrasonic dispersion treatment was performed for 1 minute. Next, 126.4 g of ion exchanged water was added thereto, and the ultra sonic dispersion treatment was performed again for 1 minute. The $\zeta$ potential was measured after diluting the obtained polymer emulsion (slurry A) with ion exchanged water based on the sample condition described above, and it was confirmed that the $\zeta$ potential of the particles A was positive (+25 mV).

<Production of slurry B>

A slurry B was obtained in the same method as in Example 1.

<Production of slurry C>

First, 400 g of the slurry B (corresponds to 59.3 g of lithium cobaltate, 100 parts by weight of lithium cobaltate) was placed in a 1 L flask, a dispersion treatment was performed using an ultrasonic homogenizer while stirring, and at the same time, 209.6 g of the slurry A (resin particles: 32 parts by weight, GOHSEFIMER K-210: 4.3 parts by weight) was gradually added to this slurry B. After that, a slurry C was obtained by further adding 8 g of ion exchanged water to adjust the ion exchanged water to 900 parts by weight relative to 100 parts by weight of lithium cobaltate and then performing a dispersion treatment for 10 minutes.

<aggregation step and firing step>

Sintered lithium cobaltate particles (see Fig. 2) were obtained by performing the aggregation step and the firing step in the same method as in Example 1.

(Example 6)

<Production of slurry A>

First, 9.6 g of polymethylmethacrylate particles from the market (mix-150: average particle size 1.5 $\mu$m) was added to 200g of ion exchanged water, and then an ultrasonic dispersion treatment was performed for 1 minute. The $\zeta$ potential was measured after diluting the obtained polymer emulsion (slurry A) with ion exchanged water based on the sample condition described above, and it was confirmed that the $\zeta$ potential of the particles A was negative (-65 mV).

<Production of slurry B>

A slurry B was obtained in the same method as in Example 1.

<Production of slurry C>

A slurry C was obtained in the same method as in Example 1

<Aggregation step and firing step>

Sintered lithium cobaltate particles were obtained by performing the aggregation step and the firing step in the same method as in Example 1.

(Example 7)

<Production of slurry A>

First, 9.6 g of polymethylmethacrylate particles from the market (MP-1000, manufactured by Soken Chemical & Engineering Co., Ltd.: average particle size 0.4 μm) was added to 32 g of a 4% by weight aqueous solution of GOHSEFIMER K-210 manufactured by Nippon Synthetic Chemical Industry Co., Ltd., which is polyvinyl alcohol having a quaternary ammonium salt group in the side chain, an ultrasonic dispersion treatment was performed for 1 minute, 168 g of ion exchanged water was added thereto, and the ultrasonic dispersion treatment was performed again for 1 minute. The ζ potential was measured after diluting the obtained polymer emulsion (slurry A) containing surface-modified resin particles (particles A) with ion exchanged water based on the sample condition described above, and it was confirmed that the ζ potential of the particles A was positive (+15 mV).

<Production of slurry B>

A slurry B was obtained in the same method as in Example 1.

<Production of slurry C>

A slurry C was obtained in the same method as in Example 1,

<Aggregation step and firing step>

Sintered lithium cobaltate particles were obtained by performing the aggregation step and the firing step in the same method as in Example 1.

(Example 8)

<Production of slurry A>

A slurry A was obtained in the same method as in Example 6.

<Production of slurry B>

A slurry B was obtained in the same method as in Example 1.

<Production of slurry C>

A slurry C was obtained in the same method as in Example 4.

<Aggregation step and firing step>

Sintered lithium cobaltate particles were obtained by performing the aggregation step and the firing step in the same method as in Example 1.

(Example 9)

<Production of slurry A>

First, 9.6 g of polymethylmethacrylate particles from the market (MX-300: average particle size 3.0 μm) was added to 200 g of ion exchanged water, and then an ultrasonic dispersion treatment was performed for 1 minute. The ζ potential was measured after diluting the obtained polymer emulsion (slurry A) with ion exchanged water based on the sample condition described above, and it was confirmed that the ζ potential of the particles A was negative (-65 mV).

<Production of slurry B>

A slurry B was obtained in the same method as in Example 1.

<Production of slurry C>

A slurry C was obtained in the same method as in Example 4.

<Aggregation step and firing step>

Sintered lithium cobaltate particles were obtained by performing the aggregation step and the firing step in the same method as in Example 1.

(Example 10)

<Production of slurry A>

First, 9.6 g of polymethylmethacrylate particles from the market (MX-500: average particle size 5.0 $\mu$m) was added to 200 g of ion exchanged water, and then an ultrasonic dispersion treatment was performed for 1 minute. The $\zeta$ potential was measured after diluting the obtained polymer emulsion (slurry A) with ion exchanged water based on the sample condition described above, and it was confirmed that the $\zeta$ potential of the particles A was negative (-65 mV).

<Production of slurry B>

A slurry B was obtained in the same method as in Example 1.

<Production of slurry C>

A slurry C was obtained in the same method as in Example 4.

<Aggregation step and firing step>

Sintered lithium cobaltate particles were obtained by performing the aggregation step and the firing step in the same method as in Example 1.

(Comparative Example 1)

<Production of slurry A>

First, 9.6 g of polymethylmethacrylate particles from the market (MX-1000: average particle size 10.0 $\mu$m) was added to 200 g of ion exchanged water, and then an ultrasonic dispersion treatment was performed for 1 minute. The $\zeta$ potential was measured after diluting the obtained polymer emulsion (slurry A) with ion exchanged water based on the sample condition described above, and it was confirmed that the $\zeta$ potential of the particles A was negative (-65 mV).

<Production of slurry B>

A slurry B was obtained in the same method as in Example 1.

<Production of slurry C>

A slurry C was obtained in the same method as in Example 4.

<Aggregation step and firing step>

Sintered lithium cobaltate particles were obtained by performing the aggregation step and the firing step in the same method as in Example 1.

(Example 11)

Sintered lithium cobaltate particles were obtained by performing from the production of the slurry to the firing step in the same method as in Example 1 except that the maximum firing temperature in the firing step was made to be 950°C.

(Comparative Example 2)

Sintered lithium cobaltate particles were obtained by performing from the production of the slurry to the firing step in the same method as in Example 1 except that the maximum firing temperature in the firing step was made to be 1100°C.

(Comparative Example 3)

Sintered lithium cobaltate particles were obtained by performing from the production of the slurry to the firing step in the same method as in Example 1 except that the maximum firing temperature in the firing step was made to be 400°C and the firing time at this temperature was made to be 0.5 hour.

(Example 12)

<Production of slurry A>

A slurry A was obtained in the same method as in Example 1.

<Production of slurry B>

A slurry was prepared by adding 225 g of lithium cobaltate particles (HLC-17, manufactured by Honjo Chemical Corporation) to 1275 g of ethanol, and then a pulverization treatment was performed by Ultra Apex Mill UAM-05 manufactured by Kotobuki Industries Co., Ltd. At this time, the media (zirconia) size was made to be 0.05 mm, the media filling rate was made to be 70%, and the circumferential speed was made to be 10 m/s. This pulverization treatment was completed after 60 minutes from the start when it was confirmed that the average particle size reached to 1.5 $\mu$m. Lithium cobaltate particles having an average particle size of 1.5 $\mu$m were obtained by removing ethanol from the obtained slurry by an evaporator. A slurry B was obtained by adding 60 g of the lithium cobaltate particles to 340 g of ion exchanged water, and then performing a dispersion treatment for 10 minutes using an ultrasonic homogenizer. The $\zeta$ potential of the particles B was negative (-40 mV).

<Production of slurry C>

A slurry C was obtained in the same method as in Example 1.

<Aggregation step and firing step>

Sintered lithium cobaltate particles were obtained by performing the aggregation step and the firing step in the same method as in Example 1.

(Comparative Example 4)

<Production of slurry C>

A slurry C was obtained by producing a slurry B in the same method as in Example 12 without producing a slurry A, further adding ion exchanged water to adjust the ion exchanged water to 900 parts by weight relative to 100 parts by weight of lithium cobaltate, and then performing a dispersion treatment for 10 minutes.

<Aggregation step and firing step>

Sintered lithium cobaltate particles were obtained by performing the aggregation step and the firing step in the same method as in Example 1.

(Comparative Example 5)

<Production of slurry C>

A slurry C was obtained by producing a slurry B in the same method as in Example 1 without producing a slurry A, further adding ion exchanged water to adjust the ion exchanged water to 900 parts by weight relative to 100 parts by weight of lithium cobaltate, and then performing a dispersion treatment for 10 minutes.

<Aggregation step and firing step>

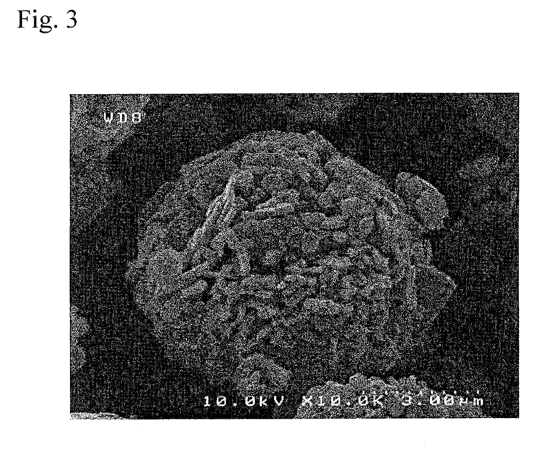

Sintered lithium cobaltate particles (see Fig. 3) were obtained by performing the aggregation step and the firing step in the same method as in Example 1.

(Comparative Example 6)

<Production of slurry C>

A slurry C was obtained by producing a slurry B in the same method as in Example 1 without producing a slurry A, adding 9.5 g (corresponds to 16 parts by weight relative to 100 parts by weight of lithium cobaltate) of polymethylmethacrylate particles from the market (MX-300: average particle size 3.0 μm) to 400g of this slurry B, and then performing a dispersion treatment for 10 minutes.

<Aggregation step and firing step>

Sintered lithium cobaltate particles (see Fig. 3) were obtained by performing the aggregation step and the firing step in the same method as in Example 11.

(Example 13)

<Production of slurry A>

A slurry A was obtained in the same method as in Example 2.

<Production of slurry B>

A slurry B was obtained by adding 150 g of lithium manganate having an average particle size of 1.2 μm to 750 g of ion exchanged water, adding 1.5 g of 1 part by weight of POIZ 532A (a surfactant manufactured by Kao Corporation) relative to 100 parts by weight of the lithium manganate to this ion exchanged water slurry, mixing and stirring the mixture, and performing a dispersion treatment on the mixture for 10 minutes using an ultrasonic homogenizer (Ultrasonic Generator; MODEL US-300T, manufactured by NIHONSEIKI KAISHA LTD., probe diameter: 20 mm, V-LEVEL: 400 μA. The ζ potential of the particles B was negative (-63 mV).

<Production of slurry C>

A slurry C was obtained by placing 180 g of the slurry B in a 1L separable flask, adding dropwise a mixture of 15.6 g of the slurry A (8 parts by weight of the resin particles relative to 100 parts by weight of the lithium complex oxide particles) and 2 g of a 4% by weight aqueous solution of GOHSEFIMER K-210 (corresponds to 0.30 part by weight of the solid content relative to 100 parts by weight of the lithium complex oxide particles) from a dropping funnel while stirring, increasing the temperature to 80°C, aging at 80°C for 20 minutes, and cooling to room temperature.

<Aggregation step and firing step>

Sintered lithium manganate particles were obtained by performing the aggregation step and the firing step in the same method as in Example 1 except that the maximum firing temperature in the firing step was made to be 850°C and the firing time at this temperature was made to be 20 hours.

(Example 14)

<Production of slurry A>

A dispersion was obtained by mixing 100 g of t-butylmethacrylate, 300 g of ion exchanged water, 0.5 g of QUARTAMIN 24P manufactured by Kao Corporation (27% by weight aqueous solution of a lauryltrimethyl ammonium salt) as a cationic surfactant, 1.0 g of EMULGEN 1135S-70 manufactured by Kao Corporation as a nonionic surfactant, and 0.5 g of V-50 manufactured by Wako Pure Chemical Industries, Ltd. as an initiator and emulsifying the mixture by performing a dispersion treatment on the mixture for 5 minutes using an ultrasonic homogenizer (Ultrasonic Generator; MODEL US-300T, manufactured by NIHONSEIKI KAISHA LTD., probe diameter: 20 mm, V-LEVEL: 400 $\mu$A). Next, 20 g of this dispersion was placed in a 1L separable flask, and 100 g of ion exchanged water was added thereto. This dispersion was aged by increasing the temperature to 80°C while stirring under a nitrogen atmosphere, adding the remaining dispersion dropwise from a dropping funnel over 2 hours, and then stirring for 2 hours. After aging, it was cooled to room temperature and a polymer emulsion (slurry A) containing surface-modified resin particles (particles A) was obtained. The average particle size of the resin particles included in this polymer emulsion was 0.5 $\mu$m. Further, the $\zeta$ potential was measured after diluting the polymer emulsion with ion exchanged water based on the sample condition described above, and it was confirmed that the $\zeta$ potential of the particles A was positive (+49 mV).

<Production of slurry C>

A slurry C was obtained by adding 100 g of lithium manganate having an average particle size of 1.2 $\mu$m and 440 g of ion exchanged water to 40g of the slurry A obtained above (corresponds to 8.0 g of the solid content), mixing and stirring the mixture, and performing a dispersion treatment on the mixture for 10 minutes using an ultrasonic homogenizer (Ultrasonic Generator; MODEL US-300T, manufactured by NIHONSEIKI KAISHA LTD., probe diameter: 20 mm, V-LEVEL: 400 $\mu$A).

<Aggregation step and firing step>

Sintered lithium manganate particles were obtained by performing the aggregation step and the firing step in the same method as in Example 1 except that the maximum firing temperature in the firing step was made to be 850°C and the firing time at this temperature was made to be 20 hours.

(Example 15)

<Production of slurry A>

A slurry A was obtained in the same method as in Example 6.

<Production of slurry C>

A slurry C (lithium manganate particles: 100 parts by weight, resinparticles: 8 parts by weight) was obtained by adding 175 g of the slurryA (corresponds to 8g of polymethylmethacrylate particles) and 100 g of lithium manganate having an average particle size of 1.2 $\mu$m to 733 g of ion exchanged water, mixing and stirring the mixture, and performing a dispersion treatment using an ultrasonic homogenizer.

<Aggregation step and firing step>

Sintered lithium manganate particles were obtained by performing the aggregation step and the firing step in the same method as in Example 1 except that the maximum firing temperature in the firing step was made to be 850°C and the firing time at this temperature was made to be 20 hours.

(Comparative Example 7)

<Production of slurry A>

A slurry A was obtained by adding 20 g of polymethylmethacrylate particles (MBX8, manufactured by Sekisui Plastics Co., Ltd., average particle size: 8.0 $\mu$m) to 80 g of ion exchanged water and then performing a dispersion treatment on the mixture for 5 minutes using an ultrasonic homogenizer (Ultrasonic Generator; MODEL US-300T, manufactured by NIHONSEIKI KAISHA LTD., probe diameter: 20 mm, V-LEVEL: 400 $\mu$A). The $\zeta$ potential was measured after diluting the slurry A with ion exchanged water based on the sample condition described above, and it was confirmed that the $\zeta$ potential of the polymethylmethacrylate particles was negative (-70 mV).

<Production of slurry B>

A slurry B was obtained in the same method as in Example 13.

<Production of slurry C>

A slurry C was obtained by adding 30 g of the slurry A (corresponds to 6.0 g of the solid content, 8.0 parts by weight of the resin particles relative to 100 parts by weight of the lithium complex oxide particles) and 100 g of ion exchanged water to 450 g of the slurry B (corresponds to the solid content of 75 g) and then performing a dispersion treatment for 10 minutes using an ultrasonic homogenizer.

<Aggregation step and firing step>

Sintered lithium manganate particles were obtained by performing the aggregation step and the firing step in the same method as in Example 1 except that the maximum firing temperature in the firing step was made to be 850°C and the firing time at this temperature was made to be 20 hours.

(Comparative Example 8)

A $MnO_2$ slurry having an average preliminary particle size of 0.03 $\mu$m and an average aggregate particle size of 0.2 $\mu$m was obtained by adding 420 g of $MnO_2$ having an average preliminary particle size of 0.03 $\mu$m and an average aggregate particle size of 34 $\mu$m to 2580 g of water, further adding 7 g of POIZ 532A manufactured by Kao Corporation, and performing wet pulverization for 150 minutes under the condition of a disk circumferential speed of 14 m/second and a flow rate of 160 g/minute using DYNO-MILL MULTI-LAB manufactured by Shinmaru Enterprises Corporation (capacity 0.6 L, filled with 1836 g of 0.2 mm zirconia beads). Next, a slurry of lithium carbonate having an average preliminary particle size of 0.06 $\mu$m and an average aggregate particle size of 2.7 $\mu$m was obtained by adding 420 g of lithium carbonate having an average preliminary particle size of 25 $\mu$m and an average aggregate particle size of 84 $\mu$m to 2380 g of water, further adding 20 g of POIZ 532A manufactured by Kao Corporation, and performing wet pulverization for 30 minutes under the condition of a disk circumferential speed of 14 m/second and a flow rate of 160 g/minute using DYNO-MILL MULTI-LAB manufactured by Shinmaru Enterprises Corporation (capacity 0.6 L, filled with 1836 g of 0.2 mm zirconia beads). After 100 parts by weight of the obtained $MnO_2$ slurry and 21.8 parts by weight of the obtained lithium carbonate slurry were mixed with a disperser, spray drying was performed under the condition of a hot air supply temperature of about 135°C and an outlet temperature of a dryer of about 80°C using a spray dryer SD-1000 (manufactured by Tokyo Rikakikai Co., Ltd.). The obtained spherical particles were placed in an alumina crucible and fired in an electric furnace (MS electric furnace SLA-2025D, manufactured by Motoyama Co., Ltd., production number MS-0435). After the temperature of the furnace reached 800°C at an average temperature rising speed of 100°C/hour, the firing was performed at 800°C for 5 hours while constantly flowing air into the furnace at a flow rate of 5 L/minute. A slurry for forming a positive electrode was prepared by the above-described method using the sintered lithium manganate particles after firing and was applied onto a collector and dried. However, a dried body of the slurry was peeled from the collector after drying.

(Example 16)

<Production of slurry A>

A slurry A was obtained in the same method as in Example 1.

<Production of slurry B>

A slurry was prepared by adding 225 g of lithium nickelate particles (manufactured by Honjo Chemical Corporation, average particle size 10 $\mu$m) and 22.4 g of a dispersant (POIZ 532A) to 1270 g of ion exchanged water, and then a pulverization treatment was performed by Ultra Apex Mill UAM-05 manufactured by Kotobuki Industries Co., Ltd. At this time, the media (zirconia) size was made to be 0.1 mm, the media filling rate was made to be 70%, and the circumferential speed was made to be 8 m/s. The pulverization treatment was completed after 30 minutes from the start when it was confirmed that the average particle size reached to 1.5 $\mu$m. The $\zeta$ potential was measured after diluting the obtained slurry (slurry B) with ion exchanged water based on the sample condition described above, and it was confirmed that the $\zeta$ potential of the particles B was negative (-60 mV).

<Production of slurry C>

First, 400 g of the slurry B (corresponds to 59.3 g of lithium nickelate, 100 parts by weight of lithium nickelate) was placed in a 1L flask, a dispersion treatment was performed using an ultrasonic homogenizer while stirring, and at the same time, 209.6g of the slurry A (resin particles: 16 parts by weight, GOHSEFIMER K-210: 2.2 parts by weight) was gradually added to this slurry B. After that, a dispersion treatment was performed for 10 minutes, and a slurry C was obtained.

<Aggregation step and firing step>

Sintered lithium nickelate, particles were obtained by performing the aggregation step and the firing step in the same method as in Example 1 except that the maximum firing temperature in the firing step was made to be 700°C.

(Comparative Example 9)

<Production of slurry A>

A slurry A was obtained in the same method as in Example 1.

<Production of slurry B>

A slurry B was obtained in the same method as in Example 16.

<Production of slurry C>

First, 400 g of the slurry B (corresponds to 59.3 g of lithium nickelate, 100 parts by weight of lithium nickelate) was placed in a 1 L flask, a dispersion treatment was performed using an ultrasonic homogenizer while stirring, and at the same time, 104.8 g of the slurry A (resin particles: 8.1 parts by weight, GOHSEFIMER K-210: 1.1 parts by weight) was gradually added to this slurry B. After that, a slurry C was obtained by further adding ion exchanged water to adjust the ion exchanged water to 900 parts by weight relative to 100 parts by weight of lithium nickelate, and then performing a dispersion treatment for 10 minutes.

<aggregation step and firing step>

Sintered lithium nickelate particles were obtained by performing the aggregation step and the firing step in the same method as in Example 1 except that the firing time at the firing maximum temperature in the firing step was made to be 10 hours.

The measurement of the physical properties and the evaluation of battery characteristics (high-speed discharge characteristics, internal resistance) described above were performed on the positive electrode active material particles of Examples 1 to 16 and Comparative Examples 1 to 9. The conditions and the like of the production method are shown in Table 2, and the evaluation results are shown in Table 3.

[Table 2]

| | SLURRY A | | | | | SLURRY B | | | | SLURRY C | | | AGGREGATION STEP | FIRING STEP | |
|---|---|---|---|---|---|---|---|---|---|---|---|---|---|---|---|
| | SOLVENT | SURFACE-MODIFIED RESIN PARTICLES (PARTICLES A) | | | | SOLVENT | LITHIUM COMPLEX OXIDE PARTICLES (PARTICLES B) | | | CONTENT OF ION EXCHANGED WATER | CONTENT OF PARTICLES A | CONTENT OF PARTICLES B | AGGREGATION METHOD | MAXIMUM FIRING TEMPERATURE | FIRING TIME |
| | | RESIN PARTICLES | | CATIONIC SURFACTANT | ζ POTENTIAL | | COMPOSITION | AVERAGE PARTICLE SIZE | ζ POTENTIAL | | | | | | |
| | | TYPE | AVERAGE PARTICLE SIZE (μM) | | mV | | | μM | mV | PARTS BY WEIGHT | PARTS BY WEIGHT | PARTS BY WEIGHT | | °C | HOUR |
| Example 1 | ION EXCHANGED WATER | MX-150 | 1.5 | K-210 | 25 | ION EXCHANGED WATER | LITHIUM COBALTATE | 1.5 | -67 | 905 | 16 | 100 | SPRAY DRYING | 800 | 30 |
| Example 2 | ION EXCHANGED WATER | PBMA | 5.0 | K-210 | 41 | ION EXCHANGED WATER | LITHIUM COBALTATE | 1.5 | -67 | 900 | 16 | 100 | SPRAY DRYING | 800 | 30 |
| Example 3 | ION EXCHANGED WATER | MX-150 | 1.5 | K-210 | 25 | ION EXCHANGED WATER | LITHIUM COBALTATE | 1.5 | -67 | 905 | 16 | 100 | SPRAY DRYING | 650 | 30 |
| Example 4 | ION EXCHANGED WATER | MX-150 | 1.5 | K-210 | 25 | ION EXCHANGED WATER | LITHIUM COBALTATE | 1.5 | -67 | 900 | 8 | 100 | SPRAY DRYING | 800 | 30 |
| Example 5 | ION EXCHANGED WATER | MX-150 | 1.5 | K-210 | 25 | ION EXCHANGED WATER | LITHIUM COBALTATE | 1.5 | -67 | 900 | 32 | 100 | SPRAY DRYING | 800 | 30 |
| Example 6 | ION EXCHANGED WATER | MX-150 | 1.5 | NONE | -65 | ION EXCHANGED WATER | LITHIUM COBALTATE | 1.5 | -67 | 908 | 16 | 100 | SPRAY DRYING | 800 | 30 |
| Example 7 | ION EXCHANGED WATER | MP-1000 | 0.4 | K-210 | 15 | ION EXCHANGED WATER | LITHIUM COBALTATE | 1.5 | -67 | 905 | 16 | 100 | SPRAY DRYING | 800 | 30 |
| Example 8 | ION | MX-150 | 1.5 | NONE | -65 | ION | LITHIUM | 1.5 | -67 | 900 | 8 | 100 | SPRAY DRYING | 800 | 30 |

| | | | | | | | | | | | | | | |
|---|---|---|---|---|---|---|---|---|---|---|---|---|---|---|
| | EXCHANGED WATER | | | | | EXCHANGED WATER | COBALTATE | | | | | | | |
| Example 9 | ION EXCHANGED WATER | MX-300 | 3.0 | NONE | -65 | ION EXCHANGED WATER | LITHIUM COBALTATE | 1.5 | -67 | 900 | 8 | 100 | SPRAY DRYING | 800 | 30 |
| Example 10 | ION EXCHANGED WATER | MX-500 | 5.0 | NONE | -65 | ION EXCHANGED WATER | LITHIUM COBALTATE | 1.5 | -67 | 900 | 8 | 100 | SPRAY DRYING | 800 | 30 |
| Comparative Example 1 | ION EXCHANGED WATER | MX-1000 | 10.0 | NONE | -65 | ION EXCHANGED WATER | LITHIUM COBALTATE | 1.5 | -67 | 900 | 8 | 100 | SPRAY DRYING | 800 | 30 |
| Example 11 | ION EXCHANGED WATER | MX-150 | 1.5 | K-210 | 25 | ION EXCHANGED WATER | LITHIUM COBALTATE | 1.5 | -67 | 905 | 16 | 100 | SPRAY DRYING | 950 | 30 |
| Comparative Example 2 | ION EXCHANGED WATER | MX-150 | 1.5 | K-210 | 25 | ION EXCHANGED WATER | LITHIUM COBALTATE | 1.5 | -67 | 905 | 16 | 100 | SPRAY DRYING | 1100 | 30 |
| Comparative Example 3 | ION EXCHANGED WATER | MX-150 | 1.5 | K-210 | 25 | ION EXCHANGED WATER | LITHIUM COBALTATE | 1.5 | -67 | 905 | 16 | 100 | SPRAY DRYING | 400 | 0.5 |
| Example 12 | ION EXCHANGED WATER | MX-150 | 1.5 | K-210 | 25 | ION EXCHANGED WATER | LITHIUM COBALTATE | 1.5 | -40 | 898 | 16 | 100 | SPRAY DRYING | 800 | 30 |
| Comparative Example 4 | - | - | - | - | - | ION EXCHANGED WATER | LITHIUM COBALTATE | 1.5 | -40 | 900 | - | 100 | SPRAY DRYING | 800 | 30 |
| Comparative Example 5 | - | - | - | - | - | ION EXCHANGED WATER | LITHIUM COBALTATE | 1.5 | -67 | 900 | - | 100 | SPRAY DRYING | 800 | 30 |
| Comparative Example 6 | - | (MX-300)[#1] | (3.0)[#1] | - | - | ION EXCHANGED WATER | LITHIUM COBALTATE | 1.5 | -67 | 570 | 16 | 100 | SPRAY DRYING | 950 | 30 |
| Example 13 | ION EXCHANGED WATER | PBMA | 5.0 | K-210 | 41 | ION EXCHANGED WATER | LITHIUM MANGANATE | 1.2 | -63 | 551 | 8 | 100 | SPRAY DRYING | 850 | 20 |
| Example 14 | ION EXCHANGED | PBMA | 0.5 | QUARTAMIN 24P | 49 | - | LITHIUM MANGANATE | 1.2 | - | 472 | 8 | 100 | SPRAY DRYING | 850 | 20 |

27

| | | | | | | | | | | | | | | | |
|---|---|---|---|---|---|---|---|---|---|---|---|---|---|---|---|
| | WATER | | | | | | | | | | | | | | |
| Example 15 | ION EXCHANGED WATER | MX-150 | 1.5 | NONE | -65 | — | LITHIUM MANGANATE | 1.2 | — | 900 | 8 | 100 | SPRAY DRYING | 850 | 20 |
| Comparative Example 7 | ION EXCHANGED WATER | MBX8 | 8.0 | NONE | -70 | ION EXCHANGED WATER | LITHIUM MANGANATE | 1.2 | -63 | 666 | 8 | 100 | SPRAY DRYING | 850 | 20 |
| Comparative Example 8 | — | — | — | — | — | — | — | — | — | — | — | — | SPRAY DRYING | 800 | 5 |
| Example 16 | ION EXCHANGED WATER | MX-150 | 1.5 | K-210 | 25 | ION EXCHANGED WATER | LITHIUM NICKELATE | 1.5 | -60 | 905 | 16 | 100 | SPRAY DRYING | 700 | 30 |
| Comparative Example 9 | ION EXCHANGED WATER | MX-150 | 1.5 | K-210 | 25 | ION EXCHANGED WATER | LITHIUM NICKELATE | 1.5 | -60 | 900 | 8 | 100 | SPRAY DRYING | 800 | 10 |

MX-150: polymethylmethacrylate particles manufactured by Soken Chemical & Engineering Co., Ltd. (average particle size 1.5 μm, the surface is modified by an anionic surfactant)

MX-300: polymethylmethacrylate particles manufactured by Soken Chemical & Engineering Co., Ltd. (average particle size 3.0 μm, the surface is modified by an anionic surfactant)

MX-500: polymethylmethacrylate particles manufactured by Soken Chemical & Engineering Co., Ltd. (average particle size 5.0 μm, the surface is modified by an anionic surfactant)

MX-1000: polymethylmethacrylate particles manufactured by Soken Chemical & Engineering Co., Ltd. (average particle size 10.0 μm, the surface is modified by an anionic surfactant)

MP-1000: polymethylmethacrylate particles manufactured by Soken Chemical & Engineering Co., Ltd. (average particle size 0.4 μm, the surface is modified by an anionic surfactant)

PBMA: polymer particles of t-butylmethacrylate

MBX8: polymethylmethacrylate particles manufactured by Sekisui Plastics Co., Ltd. (average particle size 8.0 μm, contains an anionic surfactant incorporated into a polymer chain)

K-210: polyvinyl alcohol derivative manufactured by Nippon Synthetic Chemical Industry Co., Ltd. (polyvinyl alcohol having a quaternary ammonium salt group in the side chain)

QUARTAMIN 24P: cationic surfactant manufactured by Kao Corporation (27% by weight aqueous solution of lauryltrimethyl ammonium salt)

#1: The slurry C was produced by directly mixing the resin particles with the slurry B without producing the slurry A.

[Table 3]

| | PHYSICAL PROPERTIES OF POSITIVE ELECTRODE ACTIVE MATERIAL PARTICLES | | | | | | EVALUATION OF POSITIVE ELECTRODE COMPOSITION | | | |
| | | | | PEAK PORE SIZE | | | BATTERY CHARACTERISTICS | | | |
| | AVERAGE PARTICLE SIZE OF POSITIVE ELECTRODE ACTIVE MATERIAL PARTICLES | X-RAY DIFFRACTION HALF-VALUE WIDTH | TOTAL PORE VOLUME | MAXIMUM PEAK PORE SIZE | SUB-PEAK PORE SIZE | BET SPECIFIC SURFACE AREA | HIGH-SPEED DISCHARGE CHARACTERISTICS (%) | INTERNAL RESISTANCE (Ω) | | |
| | | | | | | | | CONDITION "a" | CONDITION "b" | CONDITION "c" |
| | (μm) | (deg) | (mL/g) | (μm) | (μm) | (m²/g) | | | | |
|---|---|---|---|---|---|---|---|---|---|---|
| Example 1 | 6.7 | 0.20 | 0.78 | 1.64 | 1.02 | 1.8 | 90 | 6.8 | 6.8 | 6.9 |
| Example 2 | 6.5 | 0.20 | 0.74 | 2.07 | 1.29 | 1.9 | 92 | 6.9 | NOT MEASURED | NOT MEASURED |
| Example 3 | 6.1 | 0.25 | 0.72 | 1.84 | 0.84 | 1.6 | 75 | 7.6 | NOT MEASURED | NOT MEASURED |
| Example 4 | 5.0 | 0.20 | 0.56 | 2.53 | 1.53 | 1.5 | 90 | 7.0 | NOT MEASURED | NOT MEASURED |
| Example 5 | 5.2 | 0.22 | 0.88 | 1.63 | 1.11 | 2.1 | 80 | 7.3 | NOT MEASURED | NOT MEASURED |
| Example 6 | 5.4 | 0.20 | 0.65 | 2.10 | 1.30 | 1.1 | 69 | 7.8 | NOT MEASURED | NOT MEASURED |
| Example 7 | 5.5 | 0.21 | 0.59 | 1.39 | 0.61 | 2.8 | 70 | 7.8 | 7.8 | 7.9 |
| Example 8 | 5.3 | 0.20 | 0.51 | 1.88 | 1.42 | 1.2 | 79 | 7.4 | NOT MEASURED | NOT MEASURED |
| Example 9 | 5.1 | 0.20 | 0.50 | 2.24 | 1.40 | 1.3 | 80 | 7.3 | NOT MEASURED | NOT MEASURED |
| Example 10 | 5.6 | 0.20 | 0.48 | 2.38 | 1.80 | 1.2 | 80 | 7.4 | NOT MEASURED | NOT MEASURED |
| Comparative Example 1 | 5.1 | 0.20 | 0.44 | 2.18 | NONE | 1.1 | 60 | 8.3 | NOT MEASURED | NOT MEASURED |
| Example 11 | 6.1 | 0.16 | 0.16 | 2.90 | 1.84 | 1.1 | 75 | 7.5 | NOT MEASURED | NOT MEASURED |
| Comparative Example 2 | 6.1 | 0.14 | 0.02 | 2.78 | NONE | 0.6 | 20 | 11.5 | NOT MEASURED | NOT MEASURED |
| Comparative Example 3 | 6.1 | 0.38 | 0.54 | 1.55 (BROAD) | NONE | 4.8 | 30 | 9.8 | NOT MEASURED | NOT MEASURED |
| Example 12 | 5.8 | 0.20 | 0.54 | 2.53 | 1.53 | 1.3 | 75 | 7.6 | NOT MEASURED | NOT MEASURED |
| Comparative Example 4 | 5.0 | 0.18 | 0.49 | 1.41 | 0.39 | 1.0 | 60 | 8.6 | NOT MEASURED | NOT MEASURED |
| Comparative Example 5 | 5.0 | 0.18 | 0.40 | 2.38 | NONE | 0.8 | 55 | 8.9 | 9.4 | 10.9 |
| Comparative Example 6 | 8.0 | 0.16 | 0.33 | 3.58 (BROAD) | 2.03 | 1.0 | 55 | 8.4 | NOT MEASURED | NOT MEASURED |
| Example 13 | 6.0 | 0.13 | 0.74 | 2.48 | 0.70 | 2.1 | 90 | 7.8 | 7.8 | 7.9 |
| Example 14 | 6.0 | 0.13 | 0.65 | 2.50 | 0.52 | 2.0 | 82 | 8.3 | NOT MEASURED | NOT MEASURED |
| Example 15 | 5.0 | 0.13 | 0.62 | 2.55 | 0.61 | 1.4 | 68 | 8.4 | 8.3 | 8.5 |
| Comparative Example 7 | 6.0 | 0.18 | 0.50 | 2.50 | NONE | 1.9 | 63 | 9.7 | 10.2 | 11.9 |
| Comparative Example 8 | 5.5 | 0.12 | 0.76 | 1.30 | 0.20 | 4.8 | IMPOSSIBLE FOR MEASUREMENT | | | |
| Example 16 | 6.0 | 0.22 | 0.62 | 2.25 | 1.38 | 2.2 | 75 | 9.0 | NOT MEASURED | NOT MEASURED |
| Comparative Example 9 | 5.6 | 0.17 | 0.09 | 4.04 (BROAD) | NONE | 1.0 | 20 | 13.4 | NOT MEASURED | NOT MEASURED |

As shown in the results in Table 3, favorable results of the high-speed discharge characteristics and the internal resistance were obtained in the sintered lithium cobaltate of Examples 1 to 12 as compared with Comparative Examples 1 to 3 and 5 in which there is no sub-peak pore size, Comparative Example 4 in which the sub-peak pore size is 0.50 μm or less, and Comparative Example 6 in which the sub-peak pore size exceeds 2.00 μm. Favorable results of the high-speed discharge characteristics and the internal resistance were obtained in the sintered lithium manganate of Examples 13 to 15 as compared with Comparative Example 7 in which there is no sub-peak pore size, and a result of an excellent film forming property of a coating film was obtained as compared with Comparative Example 8 in which the sub-peak pore size is 0.50 $\mu$m or less. Favorable results of the high-speed discharge characteristics and the internal resistance were obtained in the sintered lithium nickelate of Examples 16 as compared with Comparative Example 9 in which there is no sub-peak pore size.

**Claims**

1.  A sintered lithium complex oxide, which satisfies the following (I) to (VII):

    (I) the sintered lithium complex oxide is constituted by sintering fine particles of a lithium complex oxide;
    (II) a peak pore size giving the maximum differential pore volume in a range of a pore size of 0.01 to 10.00 $\mu$m in the pore distribution measured by a mercury porosimeter is 0.80 to 5.00 $\mu$m;
    (III) the total pore volume measured by a mercury porosimeter is 0.10 to 2.00 mL/g;
    (IV) the average particle size measured by the laser diffraction/scattering type particle size distribution is the peak pore size or more and 20 $\mu$m or less;
    (V) a sub-peak giving a differential pore volume that is 10% or more of the maximum differential pore volume exists in the side of the pore size that is smaller than the peak pore size in the pore distribution measured by a mercury porosimeter, and the sub-peak has a pore size of greater than 0.50 $\mu$m and 2.00 $\mu$m or less;
    (VI) a BET specific surface area is 1.0 to 10.0 m$^2$/g; and
    (VII) the half-value width of the strongest peak among X-ray diffraction peaks in an X-ray diffraction measurement is 0.12 to 0.30 deg.

2.  The sintered lithium complex oxide according to claim 1, which is obtained by providing a slurry comprising resin particles, a cationic surfactant and/or a polyvinyl alcohol derivative, lithium complex oxide particles, andapolarsolvent; removing the polar solvent from the slurry to give a composition; and firing the composition and at the same time, removing the resin particles from the composition, wherein

    the cationic surfactant is a quaternary ammonium salt,
    the polyvinyl alcohol derivative is a polyvinyl alcohol into which a quaternary ammonium salt group has been introduced or which has been substituted by a quaternary ammonium salt group, and
    the resin particles have an average particle size of 0.1 to 20 $\mu$m.

3.  A sintered lithium complex oxide, which is obtained by providing a slurry comprising resin particles, a cationic surfactant and/or a polyvinyl alcohol derivative, lithium complex oxide particles, and a polar solvent; removing the polar solvent from the slurry by spray drying to give a composition; and firing the composition and at the same time, removing the resin particles from the composition, wherein
    the cationic surfactant is a quaternary ammonium salt, the polyvinyl alcohol derivative is a polyvinyl alcohol into which a quaternary ammonium salt group has been introduced or which has been substituted by a quaternary ammonium salt group, and
    the resin particles have an average particle size of 0.1 to 20 $\mu$m.

4.  A positive electrode composition for a battery containing positive electrode active material particles and a conductive material, wherein
    the positive electrode active material particles include the sintered lithium complex oxide according to any one of claims 1 to 3.

5.  A positive electrode for a battery comprising positive electrode active material particles, a conductive material, and a binder, wherein
    the positive electrode active material particles include the sintered lithium complex oxide according to any one of claims 1 to 3.

6.  A lithium ion battery equipped with the positive electrode for a battery according to claim 4.

**Amended claims under Art. 19.1 PCT**

**1.** A sintered lithium complex oxide, which satisfies the following (I) to (VII):

(I) the sintered lithium complex oxide is constituted by sintering fine particles of a lithium complex oxide;
(II) a peak pore size giving the maximum differential pore volume in a range of a pore size of 0.01 to 10.00 $\mu$m in the pore distribution measured by a mercury porosimeter is 0.80 to 5.00 $\mu$m;
(III) the total pore volume measured by a mercury porosimeter is 0.10 to 2.00 mL/g;
(IV) the average particle size measured by the laser diffraction/scattering type particle size distribution is the peak pore size or more and 20 $\mu$m or less;
(V) a sub-peak giving a differential pore volume that is 10% or more of the maximum differential pore volume exists in the side of the pore size that is smaller than the peak pore size in the pore distribution measured by a mercury porosimeter, and the sub-peak has a pore size of greater than 0.50 $\mu$m and 2.00 $\mu$m or less;
(VI) a BET specific surface area is 1.0 to 10.0 m$^2$/g; and
(VII) the half-value width of the strongest peak among X-ray diffraction peaks in an X-ray diffraction measurement is 0.12 to 0.30 deg.

**2.** The sintered lithium complex oxide according to claim 1, which is obtained by providing a slurry comprising resin particles, a cationic surfactant and/or a polyvinyl alcohol derivative, lithium complex oxide particles, and a polar solvent; removing the polar solvent from the slurry to give a composition; and firing the composition and at the same time, removing the resin particles from the composition, wherein

the cationic surfactant is a quaternary ammonium salt,
the polyvinyl alcohol derivative is a polyvinyl alcohol into which a quaternary ammonium salt group has been introduced or which has been substituted by a quaternary ammonium salt group, and
the resin particles have an average particle size of 0.1 to 20 $\mu$m.

**3.** canceled)
**4.** A positive electrode composition for a battery containing positive electrode active material particles and a conductive material, wherein
the positive electrode active material particles include the sintered lithium complex oxide according to claim 1 or 2.
**5.** A positive electrode for a battery comprising positive electrode active material particles, a conductive material, and a binder, wherein
the positive electrode active material particles include the sintered lithium complex oxide according to claim 1 or 2.
**6.** A lithium ion battery equipped with the positive electrode for a battery according to claim 5.

Fig. 1

Fig. 2

Fig. 3

## INTERNATIONAL SEARCH REPORT

| | International application No. |
|---|---|
| | PCT/JP2009/067505 |

**A. CLASSIFICATION OF SUBJECT MATTER**
*H01M4/485*(2010.01)i, *H01M4/131*(2010.01)i

According to International Patent Classification (IPC) or to both national classification and IPC

**B. FIELDS SEARCHED**

Minimum documentation searched (classification system followed by classification symbols)
H01M4/485, H01M4/131

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2008/078695 A1 (Mitsubishi Chemical Corp.), 03 July 2008 (03.07.2008), claims; paragraphs [0088] to [0190], [0264]; fig. 1 to 12 & JP 2008-270161 A | 1,2,4-6 |
| A | JP 2005-123179 A (Mitsubishi Chemical Corp.), 12 May 2005 (12.05.2005), claims; paragraphs [0018] to [0077]; examples & US 2006/0134521 A1 & EP 1667260 A1 & WO 2005/031899 A1 & KR 10-2006-0066120 A & CN 1856890 A | 1,2,4-6 |

| ☒ Further documents are listed in the continuation of Box C. | ☐ See patent family annex. |
|---|---|

| | Special categories of cited documents: | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 05 January, 2010 (05.01.10) | 19 January, 2010 (19.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/067505

| C (Continuation). | DOCUMENTS CONSIDERED TO BE RELEVANT | |
|---|---|---|
| Category* | Citation of document, with indication, where appropriate, of the relevant passages | Relevant to claim No. |
| A | JP 2008-108692 A  (Mitsubishi Chemical Corp.), 08 May 2008 (08.05.2008), claims; paragraphs [0023] to [0091], [0141]; fig. 4 & US 2009/0104530 A      & EP 2006937 A2 & WO 2007/116971 A1      & KR 10-2008-0108222 A & CN 101379637 A | 1,2,4-6 |
| A | JP 2008-63213 A  (Kao Corp.), 21 March 2008 (21.03.2008), claims; examples (Family: none) | 1,2,4-6 |
| A | JP 2008-243729 A  (Toshiba Corp.), 09 October 2008 (09.10.2008), claims; paragraphs [0011] to [0016] & US 2008/0241692 A1 | 1,2,4-6 |
| A | WO 2008/126824 A1  (Kao Corp.), 23 October 2008 (23.10.2008), claims; examples & JP 2008-282804 A | 1,2,4-6 |

Form PCT/ISA/210 (continuation of second sheet) (April 2007)

<table>
<tr><td>**INTERNATIONAL SEARCH REPORT**</td><td>International application No.<br>PCT/JP2009/067505</td></tr>
</table>

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
    The only technical feature common to the inventions of claims 1-6 is "a sintered lithium complex oxide". The technical feature, however, has been publicly known as disclosed in WO 2008/078695 A1 (Mitsubishi Chemical Corp., 3 July 2008 (03.07.2008), claims, paragraphs [0088]-[0190], [0264], fig. 1-12), and JP 2005-123179 A (Mitsubishi Chemical Corp., 12 May 2005 (12.05.2005), claims, paragraphs [0018]-[0077], examples). Consequently, the common technical feature cannot be considered as a special technical feature, and there is no other common feature which can be considered as a special technical feature.
    (continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1, 2, 4-6

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

| **INTERNATIONAL SEARCH REPORT** | International application No. |
| --- | --- |
| | PCT/JP2009/067505 |

Continuation of Box No.III of continuation of first sheet(2)

It is therefore considered that there exists no special technical feature so linking the invention of claims 1, 2 and 4-6 and the invention of claim 3 as to form a single general inventive concept.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002104827 A
- JP 2005158401 A
- JP 2004083388 A
- JP 2005123179 A
- JP 2008270161 A

### Non-patent literature cited in the description

- Experimental Chemistry Lectures. Maruzen Co., Ltd, 1993, vol. 13, 125
- Encyclopedia of Chemistry (Kagaku Daijiten) 4. 15 October 1981